(19) Europäisches Patentamt
European Patent Office
Office européen des brevets

(11) EP 2 284 231 A2

(12) EUROPEAN PATENT APPLICATION

(43) Date of publication:
**16.02.2011 Bulletin 2011/07**

(51) Int Cl.:
***C09D 11/00*** *(2006.01)*

(21) Application number: **10171565.4**

(22) Date of filing: **02.08.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **12.08.2009 JP 2009187236**

(71) Applicant: **Fujifilm Corporation**
**Minato-ku**
**Tokyo (JP)**

(72) Inventors:
- **Tamura, Akio**
  **Kanagawa (JP)**
- **Ishizuka, Takahiro**
  **Kanagawa (JP)**
- **Yanagi, Terukazu**
  **Kanagawa (JP)**

(74) Representative: **HOFFMANN EITLE**
**Patent- und Rechtsanwälte**
**Arabellastraße 4**
**81925 München (DE)**

# (54) Aqueous ink composition, method of manufacturing composite particles, ink set and image forming method

(57) An aqueous ink composition includes: composite particles; and a colorant, wherein the composite particles are prepared by polymerizing at least one monomer capable of forming a second polymer in the presence of a polymer aqueous dispersion, and the polymer aqueous dispersion is prepared by adding a water-soluble electrolyte selected from an acidic compound or a salt thereof to either a first-polymer solution containing a first polymer and a solvent which dissolves the first polymer, or a first-polymer dispersion obtained from the first-polymer solution and water; and wherein the first polymer includes a hydrophilic structural unit and a hydrophobic structural unit, and at least one of the first polymer or the second polymer has a glass transition temperature of 120°C or higher.

EP 2 284 231 A2

## Description

BACKGROUND OF THE INVENTION

Field of the Invention

The present invention relates to an aqueous ink composition, a method of manufacturing composite particles, an ink set and an image forming method.

Description of the Related Art

In the inkjet recording method, recording is performed by jetting ink droplets from each of multiple nozzles provided at an inkjet head, and since noise at the time of recording operation is low, running cost is low, and high quality images can be recorded on a variety of recording media, the inkjet recording method is widely used,

Meanwhile, in the inks for inkjet recording, carbon black pigment is used for a black color ink. However, water-soluble dyes are mainly used for color inks other than the black color ink, and improvement of weather resistance (for example, light-fastness, ozone resistance and water resistance) of the water-soluble dyes is required. In particular, in view of the application of the water-soluble dyes to the field of printing, the improvement of weather resistance is especially important. The fastness of pigments is essentially high owing to the high crystallinity of the pigment, and the light fastness and water resistance of pigments are particularly superior to those of dyes. However, there are still problems with pigments such as deterioration of ink jetting properties due to ink clogging in nozzle portions, deterioration of storability due to aggregation sedimentation or the like, and deterioration of the fixability of printed matter such as decrease in rubbing resistance or glossiness due to the presence of residual particles on the surface of a recording medium.

As a technique for improving the fixability, an aqueous inkjet recording liquid, in which a self-water-dispersible copolymer resin obtained by copolymerizing unsaturated monomers having an aliphatic hydrocarbon group having from 14 to 20 carbon atoms, benzyl methacrylate monomers, and styrene monomers is used in a state in which the obtained self-dispersing copolymer resin is present in the form of a hydrosol or an emulsion, is disclosed (for example, refer to Japanese Patent Application Laid-Open (JP-A) No. 2002-88285). This recording liquid has good storability and is capable of providing a high print density and print quality even when rapid drying property owing to permeation drying is provided, and is excellent in rubbing resistance and water resistance when the recording liquid is used for forming an image.

Further, an inkjet recording ink which contains an emulsion of low MFT (minimum film forming temperature) resin having a MFT of from 60°C to 100°C, and an emulsion of high Tg (glass transition temperature) resin having a Tg of from 140°C to 200°C. has been known; and this ink is excellent in jetting properties and fixability (for example, refer to JP-A No. 8-283636).

Further, as a method of manufacturing a polymer particle dispersion (latex), a method, in which an emulsion is formed by emulsion-polymerization in the presence of a vinyl-based aqueous emulsified polymer obtained in such a manner that a hydrophobic vinyl monomer mixture containing $\alpha$, $\beta$-unsaturated carboxylic acids is polymerized in an organic solvent, and the organic solvent is removed from the resultant polymer-containing solution, followed by adding water and a basic material, has been known (for example, refer to JP-A No. 2006-249282).

Furthermore, as a method of manufacturing a polymer particle dispersion (latex), a technique, in which an electrolyte is added for controlling particle size, has been disclosed (for example, refer to JP-A No. 2000-319329). According to this manufacturing method, a latex having a predetermined particle diameter or more can be obtained at a high yield without producing a coagulated byproduct.

SUMMARY OF THE INVENTION

However, in the aqueous dispersion-containing ink disclosed in JP-A No, 2002-88285, although an effect of improving fixability is achieved to some extent, in some cases, it is difficult to obtain a stable aqueous dispersion. Moreover, even when a stable aqueous dispersion is obtained, the viscosity of the aqueous dispersion is high in some cases, so that it is difficult to apply the dispersion as an inkjet ink, for example.

The ink for inkjet recording disclosed in JP-A No. 8-283636 needs to be heated simultaneously with the application of the ink to a recording medium. Furthermore, it is described that blocking becomes worse when the ink contains a low MFT resin having a MFT of less than 60°C. Moreover, JP-A No. 8-283636 is silent on a method of manufacturing the emulsions, and there is a possibility that problems in ink jetting properties or ink stability may arise.

In the emulsion obtained by the manufacturing process disclosed in JP-A No. 2006-249282, when the emulsion is applied as an ink for inkjet recording, the blocking resistance properties of an image are inferior due to low Tg of polymer particles, in some cases.

Further, in the methods of manufacturing latexes disclosed in JP-A No. 2000-319329, an electrolyte is added to an

emulsion polymerization system, and the particle diameter of the dispersion is of a submicron order. As a result, when this latex is applied as an ink for inkjet recording, jetting stability or storability is deteriorated in some cases.

The present invention has been made in view of the above circumstances and provides an aqueous ink composition, a method of manufacturing composite particles, an ink set and an image forming method.

According to a first aspect of the invention, there is provided an aqueous ink composition including:

composite particles; and
a colorant,
wherein the composite particles are prepared by polymerizing at least one monomer capable of forming a second polymer in the presence of a polymer aqueous dispersion, and the polymer aqueous dispersion is prepared by adding a water-soluble electrolyte selected from an acidic compound or a salt thereof to either a first-polymer solution containing a first polymer and a solvent which dissolves the first polymer, or a first-polymer dispersion obtained from the first-polymer solution and water; and
wherein the first polymer includes a hydrophilic structural unit and a hydrophobic structural unit, and at least one of the first polymer or the second polymer has a glass transition temperature of 120°C or higher.

According to a second aspect of the invention, there is provided a method of manufacturing composite particles including:

polymerizing at least one monomer capable of forming a second polymer, in the presence of a polymer aqueous dispersion, thereby obtaining composite particles containing a first polymer and the second polymer,
wherein the polymer aqueous dispersion is prepared by a manufacturing process including:

preparing a first-polymer solution that includes the first polymer and a solvent dissolving the first polymer;
preparing a dispersion of the first polymer using the first-polymer solution and water; and
adding a water-soluble electrolyte selected from an acidic compound or a salt thereof to at least one of the first-polymer solution or the dispersion of the first polymer,

wherein the first polymer includes a hydrophilic structural unit and a hydrophobic structural unit, and at least one of the first polymer or the second polymer has a glass transition temperature of 120°C or higher.

According to a third aspect of the invention, there is provided an ink set including:

the aqueous ink composition according to the first aspect of the invention; and
a treatment liquid capable of forming aggregates by being brought into contact with the aqueous ink composition.

According to a fourth aspect of the invention, there is provided an image forming method including:

applying, to a recording medium, the aqueous ink composition according to the first aspect of the invention; and
forming an image by heat-fixing the recording medium to which the aqueous ink composition has been applied.

According to a fifth aspect of the invention, there is provided a method of manufacturing composite particles including:

preparing a polymer aqueous dispersion; and
polymerizing at least one monomer capable of forming a second polymer, in the presence of the polymer aqueous dispersion, thereby obtaining composite particles containing a first polymer and the second polymer,
wherein preparing the polymer aqueous dispersion includes:

preparing a first-polymer solution that includes the first polymer and a solvent dissolving the first polymer;
preparing a dispersion of the first polymer using the first-polymer solution and water; and
adding a water-soluble electrolyte selected from an acidic compound or a salt thereof to at least one of the first-polymer solution or the dispersion of the first polymer,

wherein the first polymer includes a hydrophilic structural unit and a hydrophobic structural unit, and at least one of the first polymer or the second polymer has a glass transition temperature of 120°C or higher.

## DETAILED DESCRIPTION OF THE INVENTION

### *Aqueous ink composition*

An aqueous ink composition (hereinafter simply be referred to as an "ink composition" in some cases) of the present invention includes at least one colorant and at least one kind of composite particles which are prepared by a specific manufacturing method and contain two or more polymers, and optionally further includes a water-soluble organic solvent and other additives, if needed.

The aqueous ink composition of the invention can be used not only for monochromatic image formation, but also for full color image formation. In order to form a full color image, a magenta color tone ink, a cyan color tone ink and a yellow color tone ink may be used. In order to control color tone, a black color tone ink may be further used. Moreover, inks other than a yellow tone ink, a magenta tone ink or a cyan color tone ink may be used such as a red ink, a green ink, a blue ink, a white ink, or a so-called specific color ink (for example, a colorless ink) employed in the printing field.

### *Composite particles*

The composite particles in the invention can be prepared by polymerizing at least one monomer capable of forming a second polymer in the presence of a polymer aqueous dispersion, and the polymer aqueous dispersion is prepared by adding a water-soluble electrolyte selected from an acidic compound or a salt thereof to either a first-polymer solution containing a first polymer and a solvent which dissolves the first polymer, or a first-polymer dispersion obtained from the first-polymer solution and water, wherein the first polymer includes a hydrophilic structural unit and a hydrophobic structural unit, and at least one of the first polymer or the second polymer has a glass transition temperature of 120°C or higher.

Since a method of manufacturing the polymer aqueous dispersion includes a process of adding a water-soluble electrolyte, dispersion stability of the polymer aqueous dispersion is improved, and ink stability and jetting stability of the aqueous ink composition containing the composite particles are improved. Further, since at least one of the first polymer or the second polymer has a high glass transition temperature (Tg) of 120°C or higher, effects such as weakening of the interaction between formed image-ink films and reduction of mutual adhesive strength of images are exerted. As a result, blocking resistance is improved.

The composite particles contain at least one of the first polymer and at least one of the second polymer. In the invention, at least one polymer among the two or more polymers contained in the composite particles has a glass transition temperature (Tg) of 120°C or higher, preferably 130°C or higher, and more preferably from 130°C to 300°C. When the composite particles do not contain a polymer having a glass transition temperature of 120°C or higher, blocking resistance of formed images is deteriorated in some cases.

Further, it is preferable that the composite particles contain two or more polymers including two polymers of which the absolute value of the difference between glass transition temperatures of the two polymers is 40°C or more, more preferably from 40°C to 200°C, and still more preferably from 50°C to 200°C. As a result of including the two polymers of which the absolute value of the difference between glass transition temperatures thereof is 40°C or more, a film properties of a formed image are improved, and a balance of blocking resistance and rubbing resistance is achieved more effectively.

Furthermore, it is preferable that the composite particles in the invention contain two or more polymers including two polymers of which the absolute value of the difference between glass transition temperatures of the two polymers is from 40°C to 200°C, and at least one of which has a glass transition temperature of 130°C or higher. It is more preferable that the composite particles in the invention contain two or more polymers including two polymers of which the absolute value of the difference between glass transition temperatures of the two polymers is from 50°C to 200°C, and at least one of which has a glass transition temperature of from 130°C to 300°C.

The glass transition temperatures of polymers which form the composite particles in the invention can suitably be controlled by generally-employed methods. For example, the glass transition temperature of a polymer can be controlled to be within a desired range by suitably selecting, for example, one or more of the following: the kinds of the polymerizable groups of the monomers for forming the polymer, the kinds and constituent ratios of substituents on the monomers, and the molecular weights of the polymer molecules forming the polymer particles.

In addition, in the invention, glass transition temperature means a value (hereinafter, may be referred to as "measured Tg") measured under the general measurement conditions using a differential scanning calorimeter (DSC) EXSTAR6220 manufactured by SII NanoTechnology, Inc. In the invention, the composite particles contain two or more polymers, and the glass transition temperatures of the polymers respectively correspond to two or more peaks observed in the DSC measurement.

However, if the polymer, for example, decomposes during measurement, or if it is difficult to separately measure

the glass transition temperatures of the respective polymers due to closeness of the glass transition temperatures of two or more polymers, a calculated glass transition temperature Tg calculated by the following method is used as the glass transition temperature in the invention.

Calculated Tg is calculated according to the following Formula:

$$\text{(Formula)} \quad 1/Tg = \Sigma(X_i/Tg_i);$$

Here, it is assumed that the polymer is a copolymer of n monomer components from i = 1 to i = n, $X_i$ is a weight fraction of the i-th monomer ($\Sigma X_i$ =1), Tgi is a glass transition temperature (absolute temperature scale) of a homopolymer of the i-th monomer, and Σ represents the sum from i= 1 to i = n. Values described in Polymer Handbook (3rd Edition) (J. Brandrup, E.H.Immergut (Wiley-Interscience, 1989)) can be referenced as to the value ($Tg_i$) of the glass transition temperature of the homopolymer formed from each monomer.

The composite particles in the invention are prepared by polymerizing at least one monomer capable of forming a second polymer in the presence of a polymer aqueous dispersion, and the polymer aqueous dispersion is prepared through a process of using a solution of a first polymer including a hydrophilic structural unit and a hydrophobic structural unit and adding a water-soluble electrolyte. Any polymer may be used without specific limitations as long as the glass transition temperature (Tg) of at least one of the first polymer or the second polymer contained in the composite particles is 120°C or higher. A polymer contained in the composite particles may be a vinyl polymer, or may be a condensed polymer (for example, an epoxy resin, polyester, polyurethane, polyamide, cellulose, polyether, polyurea, polyimide, polycarbonate, or the like). Among them, from the viewpoint of dispersion stability of the composite particles, it is preferable that the composite particles include at least one vinyl polymer, and it is more preferable that the composite particles include two or more vinyl polymers.

Suitable examples of vinyl polymers and monomers for forming vinyl polymers that can be used in the invention include those described in JP-A No. 2001-181549 and JP-A No. 2002-88294. Further, examples include a vinyl polymer having a dissociative group that is introduced at a terminal of a polymer chain thereof by a radical polymerization of vinyl monomer using a chain transfer agent, polymerization initiator, or iniferter having a dissociative group (or a substituent that can be converted to a dissociative group), or by an ionic polymerization using a compound having a dissociative group (or a substituent that can be converted to a dissociative group) as either an initiator or a terminating agent, may also be used.

Moreover, suitable examples of condensed polymers and monomers for forming condensed polymers include those described in JP-A No. 2001-247787.

From the viewpoint of blocking property and rubbing resistance of a formed image, the composite particles in the invention contain preferably a polymer which contains at least one kind of structural unit having a cyclic aliphatic group. The structural unit having a cyclic aliphatic group may be derived from a monomer having a cyclic aliphatic group, or may be introduced into the polymer by a polymerization reaction. The structural unit having a cyclic aliphatic group in the invention is preferably derived from a monomer having a cyclic aliphatic group, and more preferably derived from a (meth)acrylic monomer having a cyclic aliphatic group.

In the invention, the (meth)acrylic monomer having a cyclic aliphatic group (hereinafter, may be referred to as an "alicyclic (meth)acrylate") includes a structural moiety derived from a (meth)acrylic acid and a structural moiety derived from an alcohol, and has a structure including at least one unsubstituted or substituted cyclic aliphatic group in the alcohol-derived structural moiety. In addition, the cyclic aliphatic group may be the alcohol-derived structural moiety itself, or may be connected to a hydroxyl-group-derived structural moiety via a connecting group.

Here, "(meth)acrylate" means methacrylate or acrylate, and "(meth)acrylic" means methacrylic or acrylic.

The cyclic aliphatic group is not particularly limited as long as the cyclic aliphatic group contains a cyclic non-aromatic hydrocarbon group, and examples thereof include a monocyclic hydrocarbon group, a bicyclic hydrocarbon group, and a tri- or higher-cyclic hydrocarbon group. Examples of the cyclic aliphatic group include: a cycloalkyl group such as a cyclopentyl group or a cyclohexyl group; a cycloalkenyl group; a bicyclohexyl group; a norbornyl group; an isobornyl group; a dicyclopentanyl group; a dicyclopentenyl group; an adamantyl group; a decahydronaphthalenyl group; a perhydrofluorenyl group; a tricycle [5.2.1.$0^{2,6}$]decanyl group; and bicyclo[4.3.0] nonane.

The cyclic aliphatic group may further have a substituent. Examples of the substituent include an alkyl group, an alkenyl group, an aryl group, an aralkyl group, an alkoxy group, a hydroxyl group, a primary amino group, a secondary amino group, a tertiary amino group, an alkylcarbonyl group, an arylcarbonyl group and a cyano group.

Further, the cyclic aliphatic group may form a condensed ring.

The cyclic aliphatic group in the invention has preferably from 5 to 20 carbon atoms in the cyclic aliphatic moiety, from the viewpoint of viscosity and solubility.

Examples of the connecting group which connects the cyclic aliphatic group with the alcohol-derived structural

moiety include an alkylene group, an alkenylene group, an alkynylene group, an aryl alkylene group, an alkyleneoxy group, a mono- or oligo-ethyleneoxy group, and a mono- or oligo-propyleneoxy group, each of which has from 1 to 20 carbon atoms.

Specific examples of the alicyclic (meth)acrylate in the invention are shown below, but the invention is not limited to these examples.

Examples of monocyclic (meth)acrylates include cycloalkyl (meth)acrylates which have a cycloalkyl group having 3 to 10 carbon atoms, such as cyclopropyl (meth)acrylate, cyclobutyl (meth)acrylate, cyclopentyl (meth)acrylate, cyclohexyl (meth)acrylate, cycloheptyl (meth)acrylate, cyclooctyl (meth)acrylate, cyclononyl (meth)acrylate and cyclodecyl (meth) acrylate.

Examples of bicyclic (meth)acrylates include isobornyl (meth)acrylate and norbornyl (meth)acrylate.

Examples of tricyclic (meth)acrylates include adamantyl (meth)acrylate, dicyclopentanyl (meth)acrylate and dicyclopentenyloxyethyl (meth)acrylate.

These alicyclic (meth)acrylates may be used singly, or in combination of two or more thereof.

Among them, from the viewpoint of dispersion stability of the composite particles, fixability and blocking resistance, at least one of a bicyclic (meth)acrylate or a tri- or higher-cyclic (meth)acrylate is preferable, and at least one cyclic (meth)acrylate selected from isobornyl (meth)acrylate, adamantyl (meth)acrylate and dicyclopentanyl (meth)acrylate is more preferable.

It is preferable that the composite particles in the invention have characteristics such that the composite particles are aggregated by a change in pH environmental conditions. Since composite particles have such characteristics, stability of the ink composition with passage of time and high-speed recording capability can both be achieved. For example, incorporation of at least one polymer having a dissociative group into the composite particles imparts, to the composite particles, capability of aggregating by a change in pH environmental conditions. In the invention, the dissociative group is preferably an anionic group, and more preferably a carboxyl group. When the composite particles contain a polymer having a carboxyl group, a rapid aggregation rate can be achieved, and the stability of the ink composition with passage of time can be enhanced.

Further, during the aggregation of the composite particles, a colorant (for example, water-insoluble color particles) may also be incorporated, and included in the resultant aggregates. The aggregates containing composite particles and a colorant can suitably be used for, for example, forming an image.

*First polymer*

At least one of two or more of polymers contained in the composite particles is a first polymer containing a hydrophilic structural unit and a hydrophobic structural unit. The first polymer is preferably a self-dispersing polymer capable of getting into a dispersed state in an aqueous medium even in the absence of a surfactant due to a hydrophilic functional group (preferably, a dissociative group or a salt thereof) which the polymer itself has. The self-dispersing polymer is preferably a copolymer derived from monomers having an ethylenic unsaturated bond (which are hereinafter referred to as "ethylenic unsaturated monomers" in some cases).

Here, the dispersed state encompasses both of an emulsified state (emulsion) in which a water-insoluble polymer is dispersed in a liquid state in an aqueous medium, or a dispersed state (suspension) in which a water-insoluble polymer is dispersed in a solid state in an aqueous medium.

For example, the self-dispersing polymer is preferably a self-dispersing polymer in a dispersed state in which a water-insoluble polymer is dispersed in a solid state, from the viewpoint of ink fixability when the polymer is contained in the aqueous ink composition.

The following procedure can be used to determine whether a water-insoluble polymer is a self-dispersing polymer as mentioned herein: 30 g of a water-insoluble polymer is dissolved into 70 g of an organic solvent (for example, methyl ethyl ketone) to form a solution, the solution is mixed with 200g of water and a neutralizing agent capable of neutralizing dissociative groups of the water-insoluble polymer to a degree of 100% (the neutralizing agent being sodium hydroxide when the salt forming group is anionic or acetic acid when the group is cationic), the mixture is stirred with a stirrer equipped with a stirring blade at rotation rate of 200 rpm at 25°C for 30 minutes, and the organic solvent is removed from the mixture liquid. If a stable dispersion state of the water-insoluble polymer in the mixture liquid at 25°C is confirmed by visual observation for at least one week, the water-insoluble polymer is considered to be a self-dispersing polymer.

Further, the water-insoluble polymer refers to a polymer showing a solubility of 10 g or less when the polymer is dried at 105°C for 2 hours and then dissolved in 100 g of water at 25°C. The solubility is preferably 10 g or less, more preferably 5 g or less, and still more preferably 1 g or less. The solubility mentioned above is a value measured when the polymer has been neutralized with sodium hydroxide or acetic acid to a degree of 100% in accordance with the kind of the salt-forming groups of the water-insoluble polymer.

The glass transition temperature (Tg) of the first polymer (preferably, a self-dispersing polymer) contained in the composite particles may be 120°C or higher, or may be lower than 120°C.

It is preferable that the first polymer in the invention serves as an emulsifier component. The first polymer that serves as an emulsifier component is capable of forming a micelle enclosing a liquid droplet composed of emulsified components including at least one ethylenic unsaturated monomer capable of forming the second polymer to be contained in the composite particles, and polymerization can be initiated in the state where a radical polymerization initiator has been incorporated into the micelle. That is, it is preferable that the first polymer provides a polymerization site in water for the at least one ethylenic unsaturated monomer which is insoluble or hardly soluble in water.
In the present invention, the first polymer may be used singly, or two or more of the first polymer that are different in at least one of structure, copolymerization ratio, molecular weight or the like may be mixed and used.

The first polymer (preferably, a self-dispersing polymer) in the invention contains at least one kind of hydrophilic structural unit and at least one kind of hydrophobic structural unit.
From the viewpoint of dispersion stability, the at least one kind of hydrophobic structural unit preferably includes at least one kind of structural unit derived from a monomer having an ethylenic unsaturated bond, and more preferably includes at least one kind of structural unit derived from at least one of an acrylic ester monomer or a methacrylic ester monomer.

Specific examples of a monomer for forming the hydrophobic structural unit include styrene, $\alpha$-methyl styrene, methyl acrylate, ethyl acrylate, n-propyl acrylate, isopropyl acrylate, n-butyl acrylate, isobutyl acrylate, sec-butyl acrylate, tert-butyl acrylate, amyl acrylate, hexyl acrylate, 2-ethylhexyl acrylate, octyl acrylate, tert-octyl acrylate, 2-chloroethyl acrylate, 2-bromoethyl acrylate, 4-chlorobutyl acrylate, cyanoethyl acrylate, 2-acetoxyethyl acrylate, benzyl acrylate, methoxybenzyl acrylate, 2-chlorocyclohexyl acrylate, cyclohexyl acrylate, furfuryl acrylate, tetra-hydrofurfuryl acrylate, phenyl acrylate, 2-phenoxyethyl acrylate, 5-hydroxypentyl acrylate, 2,2-dimethyl-3-hydroxypropyl acrylate, 2-methoxyethyl acrylate, 3-methoxybutyl acrylate, 2-ethoxyethyl acrylate, 2-butoxyethyl acrylate, 2-(2-methoxyethoxy)ethyl acrylate, 2-(2-butoxyethoxy)ethyl acrylate, glycidyl acrylate, 1-bromo-2-methoxyethyl acrylate, 1,1-dichloro-2-ethoxyethyl acrylate, 2,2,2-tetra-fluoroethyl acrylate, 1H,1H,2H,2H-perfluorodecyl acrylate, methyl methacrylate, ethyl methacrylate, n-propyl methacrylate, isopropyl methacrylate, n-butyl methacrylate, isobutyl methacrylate, sec-butyl methacrylate, tert-butyl methacrylate, amyl methacrylate, hexyl methacrylate, benzyl methacrylate, chlorobenzyl methacrylate, octyl methacrylate, strearyl methacrylate, 2-(3-phenylpropyloxy)ethyl methacrylate, furfuryl methacrylate, tetra-hydrofurfuryl methacrylate, phenyl methacrylate, 2-phenoxyethyl methacrylate, cresyl methacrylate, naphthyl methacrylate, 2-hydroxyethyl methacrylate, 4-hydroxybutyl methacrylate, triethyleneglycol monomethacrylate, dipropylene glycol monomethacrylate, 2-methoxyethyl methacrylate, 3-methoxybutyl methacrylate, 2-ethoxyethyl methacrylate, methoxydiethyleneglycol methacrylate, 2-iso-propoxyethyl methacrylate, 2-butoxyethyl methacrylate, 2-(2-methoxyethoxy)ethyl methacrylate, 2-(2-ethoxyethoxy)ethyl methacrylate, 2-(2-butoxyethoxy)ethyl methacrylate, 2-acetoxyethyl methacrylate, 2-acetoacetoxyethyl methacrylate, allyl methacrylate, glycidyl methacrylate, 2,2,2-tetra-fluoroethyl methacrylate, and 1H,1H,2H,2H-perfluorodecyl methacrylate.

Other specific examples of a monomer for forming the hydrophobic structural unit include acrylic esters and methacrylic esters such as acrylic esters or methacrylic esters of cyclohexyl, cyclohexylmethyl, 3-cyclohexenylmethyl, 4-isopropylcyclohexyl, 1-methylcyclohexyl, 2-methyleyclohexyl, 3-methylcyclohexyl, 4-methylcyclohexyl, 1-ethylcyclohexyl, 4-ethylcyclohexyl, 2-tert-butylcyclohexyl, 4-tert-butylcyclohexyl, methyl, 3,3,5-trimethylcyclohexyl, cycloheptyl, cyclooctyl, nonyl, cyclodecyl, 2-norbornyl, isobornyl, 3-methyl-2-norbornyl, dicyclopentanyl, dicyclopentenyl, dicyclopentenyloxyethyl, adamantane-1-il, adamantane-2-il, 2-methyladamantane-2-il, 2-ethyladamantane-2-il, 3,5-dimethyladamantane-1-il, or 1,1'-bisadamantane-3-il.

The first polymer in the invention contains at least one kind of hydrophilic structural unit. The hydrophilic structural unit is preferably derived from a monomer having an ethylenic unsaturated bond. The at least one kind of hydrophilic structural unit may be derived from one kind of hydrophilic group-containing monomer, or may derive from two or more kinds of hydrophilic group-containing monomer. The hydrophilic group is not specifically restricted, and may be a dissociative group or a nonionic hydrophilic group.
In the invention, the hydrophilic group is preferably a dissociative group, and more preferably an anionic dissociative group, from the viewpoint of enhancing self-dispersibility and stability of an emulsified or dispersed state formed. Examples of dissociative groups include a carboxyl group, a phosphoric acid group and a sulfonic acid group. Among them, from the viewpoint of fixability of the aqueous ink composition to be formed, a carboxyl group is preferred.

The hydrophilic group-containing monomer in the invention is preferably a dissociative group-containing monomer, and preferably a dissociative group-containing monomer having a dissociative group and an ethylenic unsaturated bond, from the viewpoint of self-dispersibility.
Examples of the hydrophilic group-containing monomer include an unsaturated carboxylic acid monomer, an unsaturated sulfonic acid monomer, and an unsaturated phosphoric acid monomer.

Specific examples of the unsaturated carboxylic acid monomer include acrylic acid, methacrylic acid, crotonic acid, itaconic acid, maleic acid, fumaric acid, citraconic acid, and 2-methacryloyloxymethylsuccinic acid. Specific examples of the unsaturated sulfonic acid monomer include styrene sulfonic acid, 2-acrylamido-2-methylpropanesulfonic acid, 3-sulfopropyl (meth)acrylate, and bis-(3-sulfopropyl) itaconate. Specific examples of the unsaturated phosphoric acid monomer include vinylphosphonic acid, vinyl phosphate, bis(methacryloyloxyethyl) phosphate, diphenyl-2-acryloyloxyethyl phosphate, diphenyl-2-methacryloyloxyethyl phosphate and dibutyl-2-acryloyloxyethyl phosphate.
From the viewpoint of dispersion stability and jetting stability, an unsaturated carboxylic acid monomer is preferable, and acrylic acid and methacrylic acid are more preferable, among dissociative group-containing monomers.

The molecular weight of the first polymer in the invention is preferably in the range of from 3,000 to 200,000, is more preferably in the range of from 5,000 to 150,000, and still more preferably in the range of from 10,000 to 100,000, in terms of weight average molecular weight. When the weight average molecular weight is 3,000 or more, the amount of water-soluble components can effectively be reduced. Further, when the weight average molecular weight is 200,000 or less, self-emulsification stability can be improved.
The weight average molecular weight may be measured by, for example, a gel permeation chromatographic method (GPC).

Specific examples of the first polymer include Exemplary Compounds C-01 to C-10 listed below. However, the present invention is not limited to these compounds. In addition, the numerals in the parenthesis represent the mass ratios of the copolymerization components.

- C-01: methyl methacrylate/2-methoxyethyl acrylate/benzyl methacrylate/methacrylic acid copolymer (47/10/35/8);
- C-02: methyl methacrylate/ethyl acrylate/methacrylic acid polymer (60/30/110);
- C-03: benzyl methacrylate/ethyl acrylate/methacrylic acid/dimethylaminoethyl methacrylate polymer (60/30/4/6);
- C-04: methyl methacrylate/isobornyl methacrylate/methacrylic acid polymer (55/37/8);
- C-05: styrene/butyl methacrylate/methacrylic acid/dimethylaminoethyl methacrylate polymer (55/24/15/6);
- C-06: styrene/t-butyl methacrylate/acrylic acid polymer (53/27/20);
- C-07: benzyl methacrylate / butylmethacrylate / methacrylic acid polymer (55/30/15);
- C-08: benzyl methacrylate/cyclohexyl methacrylate/methacrylic acid /dimethylaminoethyl acrylate polymer (70/15/10/5);
- C-09: benzyl methacrylate/dodecyl methacrylateIN-vinyl pyrrolidone /acrylic acid polymer (50/25/5/20); and
- C-10: benzyl methacrylate/methyl methacrylate/hydroxyethyl methacrylate/acrylic acid polymer (55/15/10/20).

In the invention, the method of synthesizing the first polymer is not particularly restricted, and the first polymer can be synthesized by copolymerizing a monomer mixture by known polymerizing methods such as a solution polymerization method or a block polymerization method. Of these polymerization methods, the solution polymerization method is preferable from the viewpoint of ink jetting stability of the aqueous ink composition to be formed. For example, the first polymer may be synthesized by allowing a mixture which contains mixed monomers and optionally containing at least one of an organic solvent or a radical polymerization initiator to copolymerize under an inert gas atmosphere.

*Method of manufacturing polymer aqueous dispersion*

In the invention, the polymer aqueous dispersion is manufactured by a production method including; a process of preparing a first-polymer solution which contains the first polymer and a solvent dissolving the first polymer; a dispersing process of preparing a dispersion of the first polymer using the first-polymer solution and water; and a process of adding a water-soluble electrolyte selected from an acidic compound or a salt thereof to at least one of the first-polymer solution or the dispersion of the first polymer.

The first-polymer solution (hereinafter referred to as "copolymer solution" in some cases) in the invention contains at least one of the first polymer including a hydrophilic structural unit and a hydrophobic structural unit, and at least one solvent capable of dissolving the first polymer. The copolymer solution can be prepared by dissolving the first polymer in the solvent capable of dissolving the first polymer. The dissolution method is not particularly restricted, and common dissolution methods may be applied.

The solvent is not particularly restricted as long as the solvent can dissolve the first polymer. For example, an organic solvent in which the solubility (25°C) of the first polymer is 10 % by mass or higher (hereinafter referred to as "organic good solvent" in some cases) may be used.

In the invention, examples of organic good solvents include ketone solvents such as methyl ethyl ketone and acetone, ether solvents such as 1,3-dioxane, 1,4-dioxane, 1,3-oxolane and tetrahydrofuran, ester solvents such as ethyl acetate, and amide solvents such as dimethyl acetamide, dimethyl formamide and N-methyl pyrrolidone. In the invention, the solvent is preferably at least one selected from a ketone solvent, an ether solvent or an ester solvent, more preferably at least one selected from a ketone solvent, an ether solvent or an ester solvent, each of which has a boiling point of 100°C or lower, and still more preferably at least one selected from methyl ethyl ketone, acetone, 1,3-dioxane, 1,4-dioxane, tetrahydrofuran or ethyl acetate.
In addition, one organic good solvent may be used singly, or two or more organic good solvents may be used in combination.

Further, as the solvent capable of dissolving the first polymer in the invention, at least one organic good solvent may be used together with at least one solvent in which the solubility of the first polymer is low (hereinafter referred to as "organic poor solvent" in some cases). Here, the organic poor solvent, in which the solubility of the first polymer is low, means an organic solvent in which the solubility (25°C) of the first polymer is lower than 10 % by mass.

Examples of organic poor solvents in the invention include alcohol solvents such as ethanol, isopropyl alcohol, n-butanol, s-butanol, t-butanol and 2-ethylhexanol. Among them, an alcohol solvent having a boiling point of 100°C or lower is preferable, and at least one solvent selected from ethanol, isopropyl alcohol or t-butanol is more preferable.
In addition, one organic poor solvent may be used singly, or two or more organic poor solvents may be used in combination.

When one or more organic poor solvents are used together with one or more organic good solvents, the content of organic poor solvents is preferably from 30 % by mass to 70 % by mass, and more preferably from 30 % by mass to 60 % by mass, with respect to the entire mixed solvent to be used for dissolving the first polymer, from the viewpoint of the dispersion stability of the polymer aqueous dispersion.

In the invention, the copolymer solution may further contain at least one neutralizer.
The neutralizer is used for forming a stable dispersed state of the first polymer in an aqueous medium by neutralizing some or all of the dissociative groups which the first polymer may have.

When the first polymer in the invention has an anionic dissociative group as a dissociative group, a neutralizer to be used may be a basic compound such as an organic amine compound, ammonia or a hydroxide of an alkali metal. Examples of the organic amine compound include monomethylamine, dimethylamine, trimethylamine, monoethylamine, diethylamine, triethylamine, monopropylamine, dipropylamine, monoethanolamine, diethanolamine, triethanolamine, N, N-dimethyl-ethannlolamine, N,N-diethyl-ethanolamine, 2-dimethylamino-2-methyl-1-propanol, 2-amino-2-methyl-1-propanol, N-methyldiethanolamine, N-ethyldiethanolamine, monoisopropanolamine, diisopropanolamine and triisopropanolamine. Examples of the hydroxide of an alkali metal include lithium hydroxide, sodium hydroxide and potassium hydroxide. In particular, sodium hydroxide, potassium hydroxide, triethylamine and triethanolamine are preferable from the viewpoint of stabilizing the dispersed state of the first polymer in water.

The neutralizer (preferably, a basic compound) is used preferably in an amount of from 5 mole percent to 120 mole percent, more preferably in an amount of from 10 mole percent to 110 mole percent, and still more preferably in an amount of from 15 mole percent to 100 mole percent, with respect to 100 mole percent of the dissociative group. When the neutralizer is used in an amount of 5 mole percent or more, stabilizing effect on the dispersion of particles in water can be effectively exerted, and when the neutralizer is used in an amount of 120 mole percent or less, water-soluble components in the dispersed state can remarkably be reduced, and the effect of suppressing an increase in viscosity can be exerted.

It is preferable that the process of preparing the dispersion of the first polymer (hereinafter, may be referred to as "dispersing process") includes preparing an aqueous dispersion by mixing and stirring the first-polymer solution while adding at least water to the first-polymer solution. By adding water to the solution of the copolymer dissolved in a solvent as described above, a polymer aqueous dispersion having greater dispersion stability can be obtained without requiring a strong shear force.

Mixing and stirring in the invention is not particularly restricted, and commonly-used mixing and stirring machines and, if needed, dispersing machines such as a ultrasonic dispersing machine and a high-pressure homogenizer, may be used.
As described above, at least water is added into the copolymer solution in the invention. In addition to the water, at least one of a neutralizer or an organic solvent (preferably, organic poor solvent) may be further added.

It is preferable that the manufacturing method of the polymer aqueous dispersion in the invention may include a solvent removing process after the dispersing process. The solvent removing process is not particularly restricted as long as it is capable of removing at least a part of the solvent, and commonly-employed methods, such as distillation or vacuum distillation, may be used.
By including the solvent removing process in the invention, the resultant polymer aqueous dispersion has greater dispersion stability.

In the solvent removing process in the invention, at least a part of solvent is removed, and a part of water may be removed together with the solvent.
In the solvent removing process in the invention, the solvent is removed so as to adjust the content ratio of the solvent in the polymer aqueous dispersion to be preferably from 0.05 % by mass to 10 % by mass, and more preferably from 0.08 % by mass to 8 % by mass, relative to the mass of the solid of the first polymer.

*Water-soluble electrolyte*

The polymer aqueous dispersion in the invention is manufactured by a process including adding at least one water-soluble electrolyte selected from an acidic compound or a salt thereof to at least one of the first-polymer solution or the dispersion of the first polymer. The polymer aqueous dispersion manufactured by such a process is especially

excellent in stability, and the stability of the polymerization site in water provided by the first polymer can be enhanced. The dispersion stability of the composite particles that are formed by polymerizing at least monomer capable of forming the second polymer in this highly stable polymerization site can be improved.

The water-soluble electrolyte is not particularly restricted as long as the water-soluble electrolyte is a compound selected from an acidic compound or a salt thereof, and as long as the water-soluble electrolyte is a compound having a functional group capable of dissociating when dissolved in water. The water-soluble electrolyte may be either an organic compound or an inorganic compound. Here, the water-solubility means that the water-soluble electrolyte is soluble in an amount of 5 g or more in 100 g of water at 25°C.

Further, the water-soluble electrolyte is different from the compound (for example, basic compound such as an alkali metal hydroxide, ammonia or an organic amine compound) used as a neutralization base for neutralizing anionic dissociative groups which may be contained in the first polymer. The water-soluble electrolyte is a compound which does not substantially function as a neutralization base.

Examples of the water-soluble electrolyte in the invention include acidic compounds such as a carboxylic acid derivative, a sulfonic acid derivative, a phosphoric acid derivative, and an inorganic acid, and a compound in which an acidic functional group of any of the above acidic compounds forms a salt. The molecular weight of the acidic compound is not particularly restricted, but from the viewpoint of dispersion stability, the molecular weight of the acidic compound is preferably 1,000 or less, more preferably 500 or less, and still more preferably 300 or less.

Examples of a cation which forms a salt with the acidic compound include an alkali metal ion such as a sodium ion or a potassium ion, an ammonium ion ($NH_4^+$), and an amino alcohol ion such as a monoethanol ammonium ion ($HOCH_2CH_2NH_3^+$). The cation which forms a salt may be used singly, or two or more kinds of the cations may be used in combination.

Further, the water-soluble electrolyte may be a mixture of an acidic compound and a salt. That is, an acidic functional group of the acidic compound may partially form a salt.

Specific examples of the water-soluble electrolyte include: an acidic compound containing a carboxyl group such as acrylic acid, methacrylic acid, maleic acid, malic acid, tartaric acid, fumaric acid or lactic acid, or a salt thereof; an acidic compound containing a sulfonyl group such as methane sulfonic acid or p-toluene sulfonic acid, or a salt thereof; and a salt of an inorganic acid such as NaCl, KCl, $Na_2SO_4$, $CaCl_2$ or $AlCl_3$.

Among these, from the viewpoint of dispersion stability, the water-soluble electrolyte is preferably at least one selected from an acidic compound containing a carboxyl group, a salt thereof, or a salt of an inorganic acid, more preferably at least one selected from an acidic compound containing a carboxyl group having a molecular weight of 500 or less, a salt thereof, or a salt of an inorganic acid, and still more preferably at least one selected from maleic acid, sodium salt of maleic acid, malic acid, sodium salt of malic acid, tartaric acid, sodium salt of tartaric acid, NaCl, or $Na_2SO_4$.

The water-soluble electrolyte may be used singly, or two or more thereof may be used in combination.

In the invention, adding the water-soluble electrolyte may be performed at any stage in the manufacturing process of the polymer aqueous dispersion. For example, the water-soluble electrolyte may be added during the process of preparing a first-polymer solution containing a first polymer and a solvent which dissolves the first polymer, or may be added during the dispersing process of preparing a dispersion of the first polymer by adding water to the first-polymer solution, or may be added after the completion of the dispersing process.

In the invention, from the viewpoint of the production efficiency, it is preferable that the water-soluble electrolyte is added to the first-polymer solution.

The addition amount of the water-soluble electrolyte is such that the content of the water-soluble electrolyte is preferably from 0.01 % by mass to 10 % by mass, and more preferably from 0.02 % by mass to 5 % by mass, with respect to the first polymer, from the viewpoint of the dispersion stability of the polymer aqueous dispersion.

When the content of the water-soluble electrolyte is 10 % by mass or less, the aggregation, fusion or precipitation of the polymer aqueous dispersion can be suppressed. When the content of the water-soluble electrolyte is 0.01 % by mass or more, the thickness of the electrochemical double layer can be controlled, thereby forming fine particles having a particle diameter capable of dispersing the particles stably in an aqueous medium. That is, when the content is from 0.01 % by mass to 10 % by mass, a polymer aqueous dispersion having high stability, which was difficult to attain with conventional techniques, can be obtained.

In the invention, when a carboxylic acid derivative or a salt thereof is used as a water-soluble electrolyte, the content of the water-soluble electrolyte is preferably from 0.03 % by mass to 8 % by mass, and more preferably from 0.05 % by mass to 5 % by mass. Further, when an inorganic acid or a salt thereof is used as a water-soluble electrolyte, the content of the water-soluble electrolyte is preferably from 0.02 % by mass to 7 % by mass, and more preferably from 0.04 % by mass to 4 % by mass.

The average particle diameter (in terms of volume average particle diameter) of the first polymer particles in the polymer aqueous dispersion obtained by the above manufacturing method is preferably in the range of from 0.1 nm to 80 nm, more preferably from 0.2 nm to 60 nm, and still more preferably from 0.3 nm to 40 nm. When the average particle diameter is 0.1 nm or more, production suitability can be improved, and an increase in viscosity of the aqueous

dispersion can be suppressed. When the average particle diameter is 80 nm or less, storage stability of the aqueous dispersion can be improved. On the other hand, when the average particle diameter is less than 0.1 nm, the interaction among particles is greatly increased and the viscosity of the polymer aqueous dispersion increases, resulting in reduction of the production efficiency, in some cases. When the average particle diameter exceeds 80 nm, fusion between the particles is increased and the number of micron-size coarse particles increases, resulting in difficulty in maintaining a stable dispersed state.

The particle size distribution of the first polymer in the polymer aqueous dispersion is not particularly restricted, and may be either a wide particle size distribution or a monodisperse particle size distribution. Moreover, two or more kinds of the first polymer may be mixed and contained.

The average particle diameter and particle size distribution of the first polymer may be measured, for example, by a dynamic light scattering method.

In addition, one kind of the polymer aqueous dispersion may be used singly, or two or more kinds of the polymer aqueous dispersion may be used in combination.

*Second polymer*

The composite particles in the invention contain at least one second polymer in addition to the first polymer (preferably, self-dispersing polymer). One kind of the second polymer may be used alone, or two or more kinds of the second polymer that are different in at least one of structure, copolymerization ratio, molecular weight or the like may be mixed and used.

Although the second polymer may be a vinyl polymer or a condensation polymer, the second polymer is preferably a vinyl polymer. Monomers for forming vinyl polymers and monomers for forming condensation polymers may be selected from the monomers described in the above explanation of the first polymer. In particular, the composite particles preferably include a polymer containing at least one kind of the structural unit having a cyclic aliphatic group described above.

A preferable range of the molecular weight of the second polymer in the invention is the same as the suitable range described in the explanations of the first polymer in the above.

The glass transition temperature (Tg) of the second polymer is not particularly restricted. However, from the viewpoint of blocking resistance, the glass transition temperature (Tg) is preferably 120°C or higher, more preferably 130°C or higher, and still more preferably from 130°C to 300°C.

Specific examples of the second polymer include Exemplary Compounds B-01 to B-06 listed below. However, the present invention is not limited to these compounds. In addition, the numerals in each parenthesis represent the mass ratio of the copolymerization components.

- B-01: isobornyl methacrylate polymer (100);
- B-02: methyl methacrylate/isobornyl methacrylate polymer (40/60);
- B-03: methyl methacrylate/isobomylmethacrylate/benzyl methacrylate polymer (30/65/5);
- B-04: methyl methacrylate/dicyclopentanyl methacrylate/methacrylic acid polymer (40/50110);
- B-05: methyl methacrylate/isobornyl methacrylate polymer (20/80); and
- B-06: methyl methacrylate/isobornyl methacrylate/methacrylic acid polymer (30/66/4).

The composite particles in the invention contain the first polymer (preferably, self-dispersing polymer) and the second polymer, and the amounts of these polymers contained in the composite particles are not particularly restricted. From the viewpoint of rubbing resistance, blocking resistance and dispersion stability, it is preferable that the content of the first polymer is from 5 % by mass to 80 % by mass and the content of the second polymer is from 20 % by mass to 95 % by mass, and it is more preferable that the content of the first polymer is from 5 % by mass to 70 % by mass and the content of the second polymer is from 30 % by mass to 95 % by mass. The content ratio of the first polymer to the second polymer (first polymer/second polymer) in the composite particles is not particularly restricted. From the viewpoint of rubbing resistance, blocking resistance and dispersion stability, the content ratio is preferably from 1/20 to 5/1, and more preferably from 1/10 to 2/1.

*Manufacturing method of composite particles*

Known methods may be used without particular limitations as a manufacturing method of the composite particles in the invention as long as the methods include a process of preparing the composite particles containing the first polymer and the second polymer by polymerizing at least one monomer capable of forming the second polymer in the presence of the polymer aqueous dispersion that has been manufactured according to the above-described manufacturing method. Examples thereof include (1) emulsion polymerization and (2) dispersing emulsification.

In the invention, from the viewpoint of blocking resistance and aggregation property, the manufacturing method of the composite particles is preferably (i) a manufacturing method by emulsion polymerization including a process of emulsifying at least one monomer capable of forming the second polymer in the presence of the polymer aqueous dispersion and a process of preparing an aqueous dispersion of composite particles containing the first polymer and the second polymer by polymerizing the at least one monomer capable of forming the second polymer, or (ii) a manufacturing method by dispersing emulsification including a process of preparing an aqueous dispersion of composite particles containing the first polymer and the second polymer by emulsifying/dispersing the second polymer which has been prepared by polymerizing at least one monomer capable of forming the second polymer in the presence of the polymer aqueous dispersion.

In the invention, although it is preferable to use the first polymer (preferably self-dispersing polymer) as an emulsifier or a dispersant, a carboxylate emulsifier may be further used together with the first polymer as long as the effect of the invention is not impaired.

A carboxylate emulsifier which can be used together with the first polymer in the invention is not particularly restricted, as long as the emulsifier contains a carboxyl group in the molecule. For example, examples of emulsifiers include various kinds of purified fatty acid soaps such as beef tallow fatty acid soap, palm oil fatty acid soap, rosin acid soap, stearate, and oleate; alkenyl succinate; and N-acyl sarcosinate such as sodium N-lauroylsarcosinate. In particular, in light of stability against shear force, alkenyl succinate is preferable. Preferable examples of reactive carboxylate emulsifiers include emulsifiers as described in JP-A No. 9-302007.

(1) *Emulsion polymerization*

For example, emulsion polymerization may be performed by polymerizing an emulsion which is prepared by adding at least one monomer capable of forming the second polymer, a polymerization initiator, an emulsifier (preferably, the polymer aqueous dispersion containing the first polymer), and optionally a water-soluble polymerization chain transfer agent and the like, to an aqueous medium (for example, water).

The polymerization initiator is not particularly restricted, and examples of the polymerization initiator to be used include inorganic persulfates (such as potassium persulfate, sodium persulfate, and ammonium persulfate), azo initiators (such as 2,2'-azobis(2-diaminopropane) dihydrochloride and 2,2'-azobis[2-methyl-N -(2-hydroxyethyl)-propionamide]), and organic peroxides (such as t-butyl peroxypivalate and t-butyl hydroperoxide). These initiators may be used singly, or two or more thereof may be used in combination.

Among them, it is preferable to use at least one of an azo initiator or an organic peroxide from the viewpoint of aggregation property of the composite particles.

The amount of the polymerization initiator to be used in the invention is generally from 0.01 % by mass to 2 % by mass, and preferably from 0.2 % by mass to 1 % by mass, relative to the total amount of monomers.

The amount of the first polymer to be used as an emulsifier in the invention is preferably from 2 % by mass to 300 % by mass, and more preferably from 5 % by mass to 100 % by mass, relative to the total amount of monomers from the viewpoint of aggregation property of the composite particles. When the amount of the first polymer to be used is 2 % by mass or more, monomers can be effectively emulsified. When the amount of the first polymer to be used is 300 % by mass or less, aggregation property of the composite particle obtained can be improved.

Examples of the water-soluble polymerization chain transfer agent include mercaptans such as n-butyl mercaptan, n-octyl mercaptan, n-lauryl mercaptan, n-dodecyl mercaptan and t-dodecy mercaptan; disulfides such as tetramethyl thiuram disulfide and tetraethyl thiuram disulfide; halide derivatives such as carbon tetrachloride and carbon tetrabromide; 2-ethylhexyl thioglycolate; $\alpha$-methyl styrene dimer; and sodium phosphinate as a water-soluble polymerization chain transfer agent. These polymerization chain transfer agents may be used singly, or two or more thereof may be used in combination.

(2) *Dispersing emulsification*

Any known dispersing emulsification method may be used without particular limitations for dispersing emulsification in the invention. For example, the dispersing emulsification may be performed by any of:

a forced emulsifying method including emulsifying/dispersing a polymer solution or a molten polymer in an aqueous medium containing an emulsifier (preferably, a polymer aqueous dispersion containing the first polymer); or

a phase-inversion emulsifying method including performing phase-inversion by (i) dissolving an emulsifier in a polymer solution and adding an aqueous medium thereto, or by (ii) by gradually adding an aqueous medium solution of an emulsifier to a polymer solution.

The second polymer may be used as the polymer in the polymer solution or the molten polymer. The first polymer is

preferably used as the emulsifier. The addition amount of the first polymer as an emulsifier is the same as the addition amount in the emulsion polymerization.

In the invention, from the viewpoint of dispersion stability and aggregation property of the composite particles, it is preferable that composite particles are formed by emulsion-polymerizing at least one monomer capable of forming the second polymer in the presence of the polymer aqueous dispersion containing the first polymer.

The volume average particle diameter of the composite particles in the invention is not particularly restricted. The volume average particle diameter of composite particles is preferably in the range of from 1 nm to 400 nm, more preferably in the range of from 3 nm to 200 nm, and still more preferably in the range of from 5 nm to 100 nm. When the volume average particle diameter is 1 nm or more, aggregating property can be enhanced. When the volume average particle diameter is 400 nm or less, ink jetting property can be improved.

Further, the particle size distribution of the composite particles is not particularly restricted, and may be either a wide particle size distribution or monodisperse particle size distribution. Moreover, two or more kinds of the composite particles may be mixed and used.

In addition, the average particle diameter and particle size distribution of the composite particles may be measured, for example, by a dynamic light scattering method.

The content of the composite particles in the aqueous ink composition in the invention is preferably from 1 % by mass to 30 % by mass, and more preferably from 5 % by mass to 15 % by mass, relative to the aqueous ink composition, from the viewpoint of the glossiness of an image.

Further, the content ratio of the colorant to the composite particles (colorant/composite particle) in the aqueous ink composition in the invention is preferably from 1/0.5 to 1/10, and more preferably from 1/1 to 1/4, from the viewpoint of rubbing resistance of an image or the like.

*Colorant*

Any known dyes, pigments and the like may be used without specific limitations as a colorant in the invention. In particular, it is preferable that the colorant is almost insoluble or slightly soluble in water, from the viewpoint of ink coloring property. Specifically, examples of the colorant include various pigments, disperse dyes, oil-soluble dyes and dyes capable of forming a J-aggregate, and the colorant is preferably a pigment.

In the invention, a water-insoluble pigment itself or a pigment itself surface-treated with a dispersant may be water-insoluble coloring particles.

The kinds of pigments in the invention are not particularly restricted, and conventionally known organic and inorganic pigments may be used. Examples of pigments include polycyclic pigments such as an azo lake, an azo pigment, a phthalocyanine pigment, a perylene and a perynone pigment, an anthraquinone pigment, a quinacridone pigment, a dioxazine pigment, a diketopyrrolopyrrole pigment, a thioindigo pigment, an isoindolinone pigment and a quinophthalone pigment; dye lakes such as a basic dye lake and an acidic dye lake; organic pigments such as a nitro pigment, a nitroso pigment, aniline black and a daylight fluorescent pigment; and inorganic pigments such as titanium oxide, an iron oxide pigment and a carbon black pigment. Further, any pigments capable of being dispersed in an aqueous phase may be used, even if pigments are not described in Color Index. Furthermore, a pigment which is subjected to surface-treatment with a surfactant, a polymer dispersant or the like, and graft carbon, of course, may be used. Among these pigments, it is particularly preferable to use an azo pigment, a phthalocyanine pigment, an anthraquinone pigment, a quinacridone pigment and a carbon black pigment. Specifically, examples of pigments which may be used in the invention include pigments described in paragraph Nos. [0142] to [0145] of JP-A No. 2007-100071.

*Dispersant*

When the colorant in the invention is a pigment, it is preferable that the pigment is dispersed in an aqueous solvent by a dispersant. The dispersant may be either a polymer dispersant or a low molecular surfactant-type dispersant. Further, the polymer dispersant may be either a water-soluble dispersant or a water-insoluble dispersant.

The low molecular surfactant-type dispersant (hereinafter, may be referred to as a "low molecular dispersant") can be added for dispersing an organic pigment in an aqueous solvent stably, while maintaining low viscosity of an ink. The low molecular dispersant herein means a low molecular dispersant having a molecular weight of 2,000 or less. The molecular weight of the low molecular dispersant is preferably from 100 to 2,000, and more preferably from 200 to 2,000.

The low molecular dispersant has a structure containing a hydrophilic group and a hydrophobic group. Further, each of at least one hydrophilic group and at least one hydrophobic group may be contained in one molecule independently. The low molecular dispersant may contain plural kinds of hydrophilic groups and hydrophobic groups, respectively, and may optionally contain a linking group for connecting a hydrophilic group an a hydrophobic group.

The hydrophilic group may be anionic, cationic, nonionic, or a betaine-type which is a combination thereof. The anionic group is not particularly restricted as long as the anionic group has a negative charge. However, the anionic

group is preferably a phosphoric acid group, a phosphonic acid group, a phosphinic acid group, a sulfuric acid group, a sulfonic acid group, a sulfinic acid group or a carboxylic acid group, more preferably a phosphoric acid group or a carboxylic acid group, and still more preferably a carboxylic acid group.

The cationic group is not particularly restricted as long as the cationic group has a positive charge. However the cationic group is preferably an organic cationic substituent, is more preferably a cationic group containing a nitrogen atom or a phosphorus atom, and is still more preferably a cationic group containing a nitrogen atom. In particular, the cationic group is preferably a pyridinium cation or an ammonium cation.

The nonionic group is not particularly restricted as long as the nonionic group does not contain a negative charge or a positive charge. Examples of the nonionic group include polyalkylene oxide, polyglycerin or a sugar unit of a certain kind.

In the invention, from the viewpoint of dispersion stability and aggregating property of pigment, it is preferable that the hydrophilic group is an anionic group.

Further, when the low molecular dispersant has an anionic hydrophilic group, the pKa thereof is preferably 3 or more, from the viewpoint of promoting an aggregation reaction by bringing the low molecular dispersant into contact with an acidic treatment liquid. The pKa value of the low molecular dispersant in the invention is the value obtained experimentally from a titration curve obtained in such a manner that a liquid in which a low molecular dispersant is dissolved in a solution of tetrahydrofuran and water (3:2 (V/V)) at a concentration of 1 mml/L is titrated with an acid or an alkali.

Theoretically, if the pKa of the low molecular dispersant is 3 or more, when the low molecular dispersant is brought into contact with a treatment liquid having a pH of about 3, 50 % or more of anionic groups is in an undissociated state. Accordingly, water solubility of the low molecular dispersant decreases significantly, and an aggregation reaction occurs. That is, aggregation reactivity improves. From this point of view, it is preferable that the low molecular dispersant have a carboxylic acid group as an anionic group.

On the other hand, although the hydrophobic group may have any structures containing a hydrocarbon, a fluorocarbon, a silicone, or the like, it is particularly preferable that the hydrophobic group has a structure containing a hydrocarbon. Further, the hydrophobic group may either have a straight-chained structure or a branched structure. Moreover, the hydrophobic group may have a structure with a single chain or a structure with two or more chains, and when the hydrophobic group has a structure with two or more chains, the hydrophobic group may contain plural kinds of hydrophobic groups.

The hydrophobic group has preferably a hydrocarbon group having from 2 to 24 carbon atoms, more preferably a hydrocarbon group having from 4 to 24 carbon atoms, and still more preferably a hydrocarbon group having from 6 to 20 carbon atoms.

Among a polymer dispersant in the invention, as a water-soluble dispersant, hydrophilic polymer compounds may be used. Examples of natural hydrophilic polymer compounds include plant-derived polymers such as gum arabic, tragacanth gum, guar gum, gum Karaya, Locust bean gum, arabinogalactone, pectin or queens seed starch, sea weed-derived polymers such as alginic acid, carrageenan or agar, animal-derived polymers such as gelatin, casein, albumin or collagen, and microorganism-derived polymers such as xanthene gum or dextrin.

Further, examples of hydrophilic polymer compounds formed by chemically modifying natural products as raw materials include cellulose polymers such as methyl cellulose, ethyl cellulose, hydroxyethyl cellulose, hydroxypropyl cellulose and carboxymethyl cellulose, starch polymers such as sodium starch glycolate and sodium starch phosphate ester, and sea weed polymers such as propylene glycol alginate ester.

Examples of synthetic water-soluble polymer compounds include vinyl polymers such as polyvinyl alcohol, polyvinyl pyrrolidone and poly(vinylmethylether); acryl resins such as polyacrylamide, polyacrylic acid, an alkali metal salt thereof, and water-soluble styrene acrylic resins; water-soluble styrene maleic acid resins, water-soluble vinyl naphthalene acrylic resins, water-soluble vinyl naphthalene maleic acid resin, polyvinyl pyrrolidone, polyvinyl alcohol, an alkali metal salt of β-naphthalenesulfonic acid-formalin condensate, and polymer compounds having a salt of a cationic functional group such as a quaternary ammonium, an amino group or the like at the side chain.

Among them, from the viewpoint of dispersion stability and aggregation property of pigment, polymer compounds containing a carboxyl group are preferable, and for example, carboxyl group-containing polymer compounds such as acrylic resins(such as a water-soluble styrene acrylic resin), a water-soluble styrene maleic acid resin, a water-soluble vinyl naphthalene acrylic resin and a water-soluble vinyl naphthalene maleic acid resin, are preferable.

Among these polymer dispersants, as a water-insoluble dispersant, a polymer having both a hydrophobic moiety and a hydrophilic moiety may be used. Examples of such polymer dispersants include a styrene-(meth)acrylic acid copolymer, a styrene-(meth)acrylic acid-(meth)acrylic acid ester copolymer, a (meth)acrylic acid ester-(meth)acrylic acid copolymer, a polyethyleneglycol (meth)acrylate-(meth)acrylic acid copolymer, a styrene-maleic acid copolymer.

The weight average molecular weight of the polymer dispersant in the invention is preferably from 3,000 to 200,000, more preferably from 5,000 to 100,000, still more preferably from 5,000 to 80,000, and particularly preferably from 10,000 to 60,000.

In addition, the weight average molecular weight may be measured by the gel permeation chromatographic method (GPC), for example.

Further, the mass mixing ratio (pigment: dispersant) of a pigment and a dispersant is preferably in the range of from 1:0.06 to 1:3, more preferably in the range of from 1:0.125 to 1:2, and still more preferably in the range of from 1:0.1.25 to 1:1.5.

In the invention, when a dye is used as a colorant, particles, in which the dye is held by a water-insoluble carrier, may be used as water-insoluble coloring particles. As a dye, any known dyes may be used without particular limitations, and, for example, the dyes described in JP-A Nos. 2001-115066, 2001-335714 and 2002-249677 may be suitably used in the invention. Moreover, any carriers may be used without specific limitations, as long as the carrier is insoluble or slightly soluble in water, and inorganic materials, organic materials and the composite materials of these materials may be used. Specifically, the carriers described in JP-A Nos. 2001-181549 and 2007-169418 may suitably be used in the invention.
The carrier (water-insoluble coloring particle) holding a dye may be used as an aqueous dispersion using a dispersant. As the dispersant, the dispersant above may suitably be used.

The colorant (water-insoluble coloring particle) in the invention preferably contains a pigment and a dispersant from the viewpoints of light fastness of an image, the image quality and the like, more preferably contains an organic pigment and a polymer dispersant, and particularly preferably contains an organic pigment and a polymer dispersant containing a carboxyl group.

In the invention, the average particle diameter of water-insoluble coloring particles is preferably from 10 nm to 200 nm, more preferably from 10 nm to 150 nm, and still more preferably from 10 nm to 100 nm. When the average particle diameter is 200 nm or less, color reproducibility is good, and ink droplet jetting property is good in an inkjet recording method. Further, when the average particle diameter is 10 nm or more, the light fastness is good.
The particle size distribution of the water-insoluble coloring particles is not particularly restricted, may be either a wide particle size distribution or a monodisperse particle size distribution. Moreover, two or more kinds of water-insoluble coloring particles having monodisperse particle size distribution may be mixed and used.
In addition, the average particle diameter and particle size distribution of the water-insoluble coloring particles may be measured, for example, by a light scattering method.

In the invention, one kind of the water-insoluble coloring particles may be used alone, or two or more kinds of the water-insoluble coloring particles may be used in combination.
From the viewpoint of image density, the content of the water-insoluble coloring particles is preferably from 1 % by mass to 25 % by mass, more preferably from 2 % by mass to 20 % by mass, still more preferably from 5 % by mass to 20 % by mass, and particularly preferably from 5 % by mass to 15 % by mass relative to the aqueous ink composition.

*Water-soluble organic solvent*

The aqueous ink composition of the invention contains water as a solvent. However, the aqueous ink composition may further contain a water-soluble organic solvent. The water-soluble organic solvent may be contained as a dryness inhibitor and a permeation promoter, for example.
In particular, when the aqueous ink composition of the invention is applied to an image recording method using an inkjet system, the dryness inhibitor can effectively prevent nozzle clogging which may be caused by dryness of the ink in an ink-jetting orifice.

The dryness inhibitor is preferably a water-soluble organic solvent whose vapor pressure is lower than that of water. Specific examples of the dryness inhibitor include polyhydric alcohols represented by, for example, ethylene glycol, propylene glycol, diethylene glycol, polyethylene glycol, thiodiglycol, dithiodiglycol, 2-methyl-1,3-propanediol, 1,2,6-hexanetriol, acetylene glycol derivatives, glycerin, and trimethylolpropane; lower alkyl ethers of polyhydric alcohols such as ethylene glycol monomethyl(or ethyl)ether, diethylene glycol monomethyl (or ethyl)ether, and triethylene glycol monoethyl(or butyl)ether; heterocycles such as 2-pyrrolidone, N-methyl-2-pyrrolidone, 1, 3-dimethyl-2-imidazolidinone and N-ethyl morpholine; sulfur-containing compounds such as sulfolane, dimethyl sulfoxide and 3-sulfolene; polyfunctional compounds such as diacetone alcohol and diethanolamine; and urea derivatives. In particular, as a dryness inhibitor, a polyhydric alcohol such as glycerin, diethylene glycol or the like is preferable. Moreover, one kind of the dryness inhibitor may be used alone, or two or more kinds the dryness inhibitors may be used in combination. The dryness inhibitor is preferably contained in an ink in an amount of 10 % by mass to 50 % by mass.

Further, a permeation promoter is suitably used for better penetration of an ink into a recording medium (print sheet). Specific examples of the permeation promoters include alcohols such as ethanol, isopropanol, butanol, di(tri) ethylene glycol monobutyl ether and 1,2-hexanediol, sodium laurylsulfate, sodium oleate, and nonionic surfactants. The permeation promoter is contained in 5 % by mass to 30 % by mass in the ink composition, thereby exerting a sufficient effect. The permeation promoter is preferably used in an addition amount to the extent that the permeation promoter does not cause bleeding of a printed image or a print-through.

Further, the water-soluble organic solvent may also be used for adjusting the viscosity in addition to the above. Specific examples of the water-soluble organic solvent which may be used for adjusting the viscosity include alcohols

(for example, methanol, ethanol, propanol, isopropanol. butanol, isobutanol, sec-butanol, t-butanol, pentanol, hexanol, cyclohexanol, and benzyl alcohol); polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, and thiodiglycol); glycol derivatives (for example, ethyleneglycol monomethylether, ethyleneglycol monoethylether, ethyleneglycol monobutylether, diethyleneglycol monomethylether, diethyleneglycol monobutylether, propyleneglycol monomethylether, propyleneglycol monobutylether, dipropyleneglycol monomethylether, triethyleneglycol monomethylether, ethyleneglycol diacetate, ethyleneglycol monomethylether acetate, triethyleneglycol monomethylether, triethyleneglycol monoethylether and ethyleneglycol monophenylether); amines (for example, ethanolamine, diethanolamine, triethanolamine, N-methyl diethanolamine, N-ethyl diethanolamine, morpholine, N-ethyl morpholine, ethylenediamine, diethylene triamine, triethylenetetramine, polyethyleneimine, and tetramethyl propylenediamine); and other polar solvents (for example, formamide, N,N-dimethyl formamide, N,N-dimethyl acetamide, dimethyl sulfoxide, sulfolane, 2-pyrrolidone, N-methyl-2-pyrrolidone, N-vinyl-2-pyrrolidone, 2-oxazolidone, 1,3-dimethyl-2-imidazolidinone, acetonitrile and acetone).
In addition, one kind of the water-soluble organic solvent may be used alone, or two or more kinds the water-soluble organic solvents may be used in combination.

*Other additives*

Examples of other additives in the invention include known additives such as an anti-fading agent, an emulsion stabilizer, an permeation promoter, a ultraviolet absorber, an antiseptic agent, an antifungal agent, a pH adjuster, a surface tension adjuster, a defoaming agent, a viscosity adjuster, a dispersant, a dispersion stabilizer, a rust preventing agent and a chelating agent. These additives may be directly added to an aqueous ink composition after the aqueous ink composition is prepared, or may be added to an aqueous ink composition at the time when the aqueous composition is prepared.
Examples of the ultraviolet absorber include benzotriazole compounds, benzophenone compounds, cinnamic acid compounds, triazine compounds, or compounds absorbing ultraviolet radiation and emitting fluorescent light such as the compounds disclosed in Research Disclosure No. 24239, stilbene compounds and benzoxazole compounds.
As an anti-fading agent, various kinds of organic ant-fading agents or metal complex anti-fading agents may be used. Examples of the organic anti-fading agents include hydroquinones, alkoxy phenols, dialkoxy phenols, phenols, anilines, amines, indans, coumarones, alkoxy anilines and heterocyles, and examples of the metal complex anti-fading agents include nickel complexes and zinc complexes.
Examples of the antifungal agents include sodium dehydroacetate, sodium benzoate, sodium pyridinethione-1-oxide, ethyl p-hydroxybenzoate ester, 1,2-benzisothiazoline-3-one and a salt thereof. These antifungal agents are preferably used in an amount of 0.02 % by mass to 1.00 % by mass in the aqueous ink composition.
As a pH adjuster, a neutralizer (organic base, inorganic alkali) may be used. The pH adjuster is added to an aqueous ink composition so that the pH of the aqueous ink composition is preferably from 6 to 10, and more preferably from 7 to 10 for the purpose of improving storage stability of the aqueous ink composition.
Examples of the surface tension adjuster include a nonionic surfactant, a cationic surfactant, an anionic surfactant or a betaine surfactant.
The addition amount of the surface tension adjuster to the aqueous ink composition is such that the surface tension of the aqueous ink composition is preferably adjusted to a range from 20 mN/m to 60 mN/m, more preferably from 20 mN/m to 45 mN/m, and still more preferably from 25 mN/m to 40 mN/m, in order to suitably jet ink droplets in an inkjet recording method. On the other hand, when an ink is applied by a method other than an inkjet recording method, the surface tension is adjusted preferably to a range from 20 mN/m to 60 mN/m, and more preferably from 30 mN/m to 50 mN/m.
The surface tension (25°C) of the aqueous ink composition may be measured using a plate method, for example.
Specific examples of hydrocarbon surfactants include anionic surfactants such as an aliphatic acid salt, an alkyl sulfate ester salt, an alkyl benzenesulfonate, an alkyl naphthalenesulfonate, a dialkyl sulfosuccinate, an alkyl phosphate ester salt, a naphthalenesulfonic acid-formalin condensate and a polyoxyethylene alkyl sulfate ester salt; and nonionic surfactants such as a polyoxyethylene alkyl ether, a polyoxyethylene alkyl allyl ether, a polyoxyethylene fatty acid ester, a sorbitan fatty acid ester, a polyoxyethylene sorbitan fatty acid ester, polyoxyethylene alkylamine, a glycerin fatty acid ester, and an oxyethylene oxypropylene block copolymer. Further, SURFYNOLS (manufactured by Air Products and Chemicals, Inc.) and OLFINE E1010 (manufactured by Nisshin Chemical Industry Co., Ltd.) as acetylene polyoxyethyleneoxide surfactants are preferably used. Moreover, an amine oxide amphoteric surfactant such as N,N-dimethyl-N-alkylamine oxide is also preferable.
Furthermore, surfactants described in JP-A No. 59-157636, on pages 37 to 38, and Research Disclosure No. 308119 (1989) may also be used.
Moreover, when using fluorine (fluorinated alkyl) surfactants or silicone surfactants described in JP-A Nos. 2003-322926, 2004-325707 and 2004-309806, rubbing resistance can also be improved.

The surface tension adjuster may also be used as a defoaming agents and fluorine-containing compounds, silicone-containing compounds, cheating agents represented by EDTA or the like may also be used.

When an ink is applied by an inkjet method, from the viewpoint of ink jetting stability and an aggregation speed, the viscosity of the aqueous ink composition of the invention is preferably in the range of from 1 mPa·s to 30 mPa·s, more preferably in the range of from 1 mpa·s to 20 mPa·s, still more preferably in the range of from 2 mPa·s to 15 mPa·s, and particularly preferably in the range of from 2 mPa·s to 10 mPa·s.

Further, when an ink is applied by a method other than an inkjet method, the viscosity of the aqueous ink composition of the invention is preferably in the range of from 1 mPa·s to 40 mPa·s, and more preferably in the range of from 5 mPa·s to 20 mPa·s.

The viscosity (20°C) of the aqueous ink composition may be measured with a Brookfield viscometer, for example.

*Ink set*

An ink set of the invention includes at least one of the aqueous ink composition of the invention described above, and at least one treatment liquid capable of forming aggregates when the treatment liquid is brought into contact with the ink composition.

Details of the aqueous ink composition are described above.

In the invention, the composite particles which form an aqueous ink composition contain a polymer having a glass transition temperature of 120°C or more, and are manufactured by a specific manufacturing method, whereby blocking resistance and fixability of an image to be formed, and jetting stability are good.

*Treatment liquid*

The treatment liquid in the invention is capable of forming aggregates by bringing the treatment liquid into contact with the ink composition. Specifically, the treatment liquid in the invention preferably contains at least an aggregating component capable of forming aggregates by aggregating dispersed particles such as colorant particles (pigment and the like) in the ink composition, and optionally, other components may be contained. When using the treatment liquid together with the aqueous ink composition, for example, the speed of inkjet recording can be increased, and even if high speed recording is performed, excellent image forming property (for example, reproducibility of fine lines or minute portions) with high density and high resolution can be achieved.

*Aggregating component*

The treatment liquid may contain at least one aggregating component capable of forming aggregates by bringing the treatment liquid into contact with the ink composition. The aqueous ink composition applied to a recording medium comes into contact with the aggregating component in the treatment liquid, wherebyt the aggregation of pigment particles or the like which are stably dispersed in the ink composition is promoted.

Examples of the treatment liquid include a liquid capable of forming aggregates by changing the pH of an ink composition. At this time, the pH (25C° $\pm$ 1°C) of the treatment liquid is preferably from 1 to 6, more preferably from 1.2 to 5 and still more preferably from 1.5 to 4 from the viewpoint of the aggregating speed of the ink composition. In this case, the pH (25C° $\pm$ 1°C) of the ink composition used in a jetting process is preferably from 7.5 to 9.5 (more preferably from 8.0 to 9.0).

In particular, in the invention, it is preferable that an ink composition having a pH (25C° $\pm$ 1°C) of 7.5 or more, and a treatment liquid having a pH (25C° $\pm$ 1°C) of from 1.5 to 3 from the viewpoint of an image density, a resolution and a higher speedi of inkjet recording.

One kind of the aggregating component may be used singly, or two or kinds of the aggregating components may be used mixed and used.

The treatment liquid may be formed using at least one of acidic compound as an aggregating component. Examples of the acidic compound include a compound having a phosphoric acid group, a phosphonic acid group, a phosphinic acid group, a sulfuric acid group, a sulfonic acid group, a sulfinic acid group, or a carboxyl group, or a salt thereof (for example, polyvalent metal salt). Among them, a compound having a phosphoric acid group or a carboxyl group is preferable, and a compound having a carboxyl group is more preferable, from the viewpoint of aggregating speed of the ink composition.

The compound having a carboxyl group is preferably selected from polyacrylic acid, acetic acid, glycolic acid, malonic acid, malic acid, maleic acid, ascorbic acid, succinic acid, glutaric acid, fumaric acid, citric acid, tartaric acid, lactic acid, sulfonic acid, orthophosphoric acid, pyrrolidone carboxylic acid, pyrone carboxylic acid, pyrrole carboxylic acid, furan carboxylic acid, pyridine carboxylic acid, coumalic acid, thiophene carboxylic acid, nicotinic acid, or a derivative of these compounds or a salt (for example, polyvalent metal salt) of these compounds. One kind of these compounds

may be used singly, or two or kinds of these compounds may be used together.

The treatment liquid in the invention may include an aqueous solvent (for example, water) in addition to the acidic compound and the like.

The content of the acidic compound in the treatment liquid is preferably from 5 % by mass to 95 % by mass, more preferably from 10 % by mass to 80 % by mass, still more preferably from 15 % by mass to 50 % by mass, and particularly preferably from 18 % by mass to 30 % by mass relative to a total mass of the treatment liquid, from the viewpoint of an aggregation effect.

Further, the treatment liquid may be a treatment liquid containing at least one polyvalent metal salt as an aggregating component, whereby high-speed aggregation can be achieved. Examples of the polyvalent metal salt include salts of alkali earth metals (for example, magnesium and calcium) from the second group of the Periodic Table, salts of transition metals (for example, lanthanum) from the third group of the Periodic Table, salts of metals (for example, aluminum) of the 13th group of the Periodic Table, and salts of lanthanides (for example, neodymium). As metal salts, a carboxylate salt (a formate salt, a acetate salt, a benzoate salt or the like), a nitrate salt, a chloride salt and a thiocyanate salt are suitable. In particular, a calcium salt or a magnesium salt of carboxylic acids (formic acid, acetic acid, benzoic acid and the like), a calcium salt or a magnesium salt of nitric acid, calcium chloride, magnesium chloride, and a calcium salt or a magnesium salt of thiocyanic acid are preferable.

The content of the metal salt in the treatment liquid is preferably in the range of from 1 % by mass to 10 % by mass, more preferably in the range of from 1.5 % by mass to 7 % by mass, and still more preferably in the range of from 2 % by mass to 6 % by mass, from the viewpoint of an aggregation effect.

Further, the treatment liquid may be formed using at least one cationic organic compound as an aggregating component. Examples of the cationic organic compound include cationic polymers such as poly(vinyl pyridine) salt, polyalkyl aminoethyl acrylate, polyalkyl aminoethylmethacrylate, poly(vinylimidazole), polyethyleneimine, polybiguanide, polyguanide or polyallylamine, and a derivative thereof.

The cationic polymer has preferably a smaller weight average molecular weight, from the viewpoint of viscosity of the treatment liquid. When the treatment liquid is applied to a recording medium by an inkjet method, the molecular weight is preferably in the range of from 1,000 to 500,000, more preferably in the range of from 1,500 to 200,000, and still more preferably in the range of from 2,000 to 100,000. The weight average molecular weight of 1000 or more is advantageous from the viewpoint of the aggregating speed, and the weight average molecular weight of 500,000 or less is advantageous in view of jetting reliability. However, the weight average molecular weight is not limited to these ranges, provided that the treatment liquid is applied to a recording medium by methods other than an inkjet recording method.

Further, the cationic organic compound is preferably a primary, secondary or tertiary amine salt compound. Examples of the amine salt compound include cationic compounds such as compounds of hydrochloric acid salts or acetic acid salts (for example, lauryl amine, coconut amine, stearyl amine, rosin amine and the like), quaternary ammonium salt compounds (for example, lauryl trimethyl ammonium chloride, cetyl trimethyl ammonium chloride, lauryldimethyl benzyl ammonium chloride, benzyl tributyl ammonium chloride, benzalkonium chloride and the like), pyridinium salt compounds (for example, cetyl pyridinium chloride, cetyl pyridinium bromide and the like), imidazoline cationic compounds (for example, 2-heptadecenyl-hydroxyethyl imidazoline and the like), or an ethylene oxide adduct of a higher alkyl amine (for example, dihydroxyethyl stearyl amine and the like); and amphoteric surfactants, which exhibit cationic property in a desired pH range such as an amino acid amphoteric surfactant, an $R\text{-}NH\text{-}CH_2CH_2\text{-}COOH$ compound (R represents an alkyl group and the like), a carboxylic acid salt amphoteric surfactant (for example, stearyldimethyl betaine, lauryl dihydroxyethyl betaine and the like) a sulfuric acid ester amphoteric surfactant, sulfonic acid amphoteric surfactant and phosphoric acid ester amphoteric surfactant.

Among them, a divalent or higher valent cationic organic compound is preferable.

The content of the cationic organic compound in the treatment liquid is preferably from 1 % by mass to 50 % by mass, and more preferably from 2 % by mass to 30 % by mass, from the viewpoint of an aggregation effect.

Among them, the aggregating component is preferably a divalent or higher valent carboxylic acid, or a divalent or higher valent cationic organic compound, from the viewpoint of an aggregating property and rubbing resistance of an image.

*Other components*

In general, the treatment liquid in the invention may contain a water-soluble organic solvent in addition to the aggregating component, and may contain various other additives, to the extent that the effect of the invention is not impaired. Details of the water-soluble organic solvent are similar to those of the ink composition describe above.

Examples of other additives in the invention include known additives such as a dryness inhibitor (moistening agent), an anti-fading agent, an emulsion stabilizer, a permeation promoter, a ultraviolet absorber, an antiseptic agent, an antifungal agent, a pH adjuster, a surface tension adjuster, a defoaming agent, a viscosity adjuster, a dispersant, a dispersion stabilizer, a rust preventing agent and a chelating agent, and specific examples in other additives in the ink

composition described above may also be applied.

The viscosity of the treatment liquid is preferably in the range of from 1 mPa·s to 30 mPa·s, more preferably in the range of from 1 mPa·s to 20 mPa·s, still more preferably in the range of from 2 mPa·s to 15 mPa·s, and particularly preferably in the range of from 2 mPa·s to 10 mPa·s, from the viewpoint of aggregation speed of an ink composition.
In addition, the viscosity is measured with VISCOMETER TV-22 (trade name; manufactured by Toki Sangyo Co., Ltd.) under a condition of a temperature of 20°C.

Moreover, the surface tension of the treatment liquid is preferably from 20 mN/m to 60 mN/m, more preferably from 20 mN/m to 45 mN/m, and still more preferably from 25 mN/m to 40 mN/m, from the viewpoint of ink aggregation speed.
In addition, the surface tension is measured with AUTOMATIC SURFACE TENSIOMETER CBVP-Z (trade name; manufactured by Kyowa Interface Science Co., Ltd.) under a condition of a temperature of 25°C.

*Image forming method*

The image forming method of the invention includes an ink-applying process, in which the aqueous ink composition is applied to a recording medium, and a heat-fixing process, in which an image is formed by heat-fixing the recording medium to which the aqueous ink composition is applied, and further other processes, if needed.
Examples of other processes include a treatment liquid-applying process in which a treatment liquid capable of forming aggregates is brought into contact with the aqueous ink composition, and a heat-drying process.

In the invention, an image having both blocking resistance and good fixability can be formed when the aqueous ink composition contains a colorant and the composite particles.

*Ink-applying process*

In the ink applying process, an image is formed by applying the aqueous ink composition of the invention to a recording medium. In this process, a desired visible image can be formed by selectively applying the aqueous ink composition onto the recording medium. Examples of the method of applying the aqueous ink composition include an inkjet method, a mimeograph method, or a transfer printing method. Among them, a method of applying the aqueous ink composition by an inkjet method is preferable, from the viewpoint of the downsizing of a recording apparatus and high-speed recording.
In addition, details of each component in the aqueous ink composition of the invention and preferred embodiments are described above.

Specifically, the image recording utilizing an inkjet method can be performed by jetting, onto a desired recording medium, a liquid composition using application of energy. The desired recording medium may be plain paper, resin coated paper, paper exclusively used for inkjet recording described in JP-A Nos. 8-169172, 8-27693, 2-276670, 7-276789, 9-323475, 62-238783, 10-153989, 10-217473, 10-235995, 10-217597 and 10-337947, film, paper for common use in inkjet and electrophotographic recording, cloth, glass, metal, ceramics or the like. In addition, as the inkjet recording method which is preferably used for the invention, the method described in paragraph Nos. [0093] to [0105] of JP-A No. 2003-306623 can be used.

The inkjet method is not particularly restricted. However, any known methods, for example, a charge control system of jetting an ink by utilizing an electrostatic attractive force; a drop-on-demand system (pressure pulse system) of jetting an ink by utilizing the vibration pressure of a piezoelectric element; an acoustic inkjet system of converting electric signals into acoustic beams, irradiating them to an ink, and jetting the ink by utilizing radiation pressure; or a thermal inkjet (BUBBLEJET (registered trade mark)) system of jetting the ink by utilizing a pressure generated by bubbles formed by heating an ink, may be used.
In addition, the inkjet methods include a system of a large number of small-volume of ink droplets of low concentration ink called photo ink, a system of improving image quality using plural kinds of inks of substantially identical hue and different densities, and a system of using a colorless and transparent ink.
Ink nozzles and the like when recording is performed by an inkjet method are not particularly restricted, and may be appropriately selected according the intended use.

Examples of the inkjet head include an inkjet head of a shuttle system in which a short serial head is used and recording is performed while allowing the head to move in the width direction of a recording medium in a scanning manner, and an inkjet head of a line system in which a line head in which recording elements are arranged corresponding to the entire length of one side of a recording medium is used. In the line system, an image can be recorded over the entire surface of the recording medium by allowing the recording medium to be moved in a direction orthogonal to the direction in which the recording elements are arrayed, and a conveyance system such as a carriage according to which the short head moves in a scanning manner is not necessary. Further, since complicated scanning control for movement of the carriage and the recording medium is not necessary and only the recording medium is moved, higher recording

speed can be attained compared with a shuttle system. While the inkjet recording method of the invention is applicable to any of these, the effect of improving the jetting accuracy and the rubbing resistance of the image is generally remarkable when the inkjet recording method is applied to the line system in which dummy jetting is not performed.

Further, in the ink-applying process in the invention, when the line system is used, by using not only one kind of ink composition, but also two or more kinds of ink compositions, the ink jetting (impinging) interval between previously jetted ink composition droplet (the n th color ($n \geq 1$), for example, the second color) and the subsequently jetted ink composition droplet (the n +1 th color (for example, the third color) can be one second or less, thereby performing recording suitably. In the invention, when the ink jetting interval is one second or less using the line system, an image with excellent rubbing resistance and suppressed occurrence of blocking can be obtained at higher recording speed than previous recording speed, while preventing ink bleed or color mixing caused by interference among ink droplets. Further, an image with excellent color hue and image forming property (reproducibility of fine lines or minute portions in an image) can be obtained.

The amount of ink droplets jetted from an inkjet recoding head is preferably from 0.5 pL to 6 pL (picoliter), more preferably from 1 pL to 5 pL, and still more preferably from 2 pL to 4 pL from the viewpoint of obtaining a high-resolution image.

*Heat-fixing process*

The inkjet recording method of the invention includes a heat-fixing process subsequent to an ink-applying process, in which an ink image formed by applying an ink composition is heat-fixed by bringing the ink image into contact with a heated surface. The ink image is subjected to the heat-fixing process, whereby the image on a recording medium is fixed, and the rubbing resistance against abrasion and scratches of an image can be more enhanced. Further, when using the aqueous ink composition of the invention, it is possible to effectively prevent the formed image from being transferred to the heated surface.

It is preferable that heating is performed at a temperature higher than the glass transition temperature (Tg) of at least one polymer contained in the composite particles in the image. When heating at a temperature higher than the glass transition temperature (Tg), a film is formed on the image and the image is reinforced. Preferable range of the heating temperature is a glass transition temperature (Tg) of +10°C or higher. Specifically, the temperature is preferably in a range of from 40°C to 150°C, more preferably in a range of from 50°C to 100°C, and still more preferably in the range of from 60°C to 90°C.

The pressure applied together with the heating is preferably in a range of from 0.1 MPa to 3.0 MPa, more preferably in a range of from 0.1 MPa to 1.0 MPa, and sill more preferably in a range of from 0.1 MPa to 0.5 MPa in view of surface smoothing.

The method of heating is not particularly restricted, and examples of heating methods include non-contact drying methods such as a method of heating with a heating body such as Nichrome wire heater, a method of supplying warm air or hot air, and a method of heating with a halogen lamp or an infrared lamp. Further, a heating and pressurizing method is not particularly restricted, and examples of heating and pressurizing methods include a contact heat-fixing method such as a method of pressure-pressing a heated plate against an image forming surface of the recording medium, and a method using a heat-pressurizing apparatus which includes a pair of heat-pressurizing rollers, a pair of heat-pressurizing belts, or a heat-pressurizing belt arranged at an image-recording-surface side of the recording medium and a retention roller arranged at a side of the recording medium opposite to the heat-pressurizing belt side so as to passing the recording medium between the pair of rollers, between the pair of heat-pressurizing belts, or between the heat-pressurizing belt and the retention roller.

When the heat-pressurization is preformed, a time for nipping is preferably from 1 millisecond to 10 seconds, more preferably from 2 milliseconds to I second, and still more preferably from 4 millisecond to 100 milliseconds. A nipping width is preferably from 0.1 mm to 100 mm, more preferably from 0.5 mm to 50 mm, and still more preferably from 1 mm to 10 mm.

The heat-pressurizing roller may be a metal roller made of metal, or may be a roller having a coating layer made from an elastic body and optionally a surface layer (may also be referred to as a "releasing layer") formed on the peripheral surface of a core metal made of metal. The core metal may be formed from, for example, a cylindrical body made of iron, aluminum or SUS stainless steel, and at least a part of a surface of the core metal is preferably covered with a coating layer. In particular, the coating layer is preferably formed of a silicone resin or a fluorine resin having releasing property. Further, it is preferable that a heating body is incorporated inside of the core metal of either of heat-pressurizing rollers. The recording medium is passed though between the rollers, whereby the recording medium is subjected to a heating processing at the same time of pressurizing processing. Alternatively, the recording medium may be heated by being nipped by two heating rollers, if necessary. For example, the heating body is preferably a halogen lamp a ceramic heater, Nichrome wire or the like.

A belt substrate used for the heat-pressurizing device which forms a heat-pressurizing belt is preferably a

seamless a nickel elecroform, and the thickness of the substrate is preferably from 10 μm to 100 μm. As a material of the belt substrate, aluminum, iron, polyethylene or the like may be used in addition to nickel. When using a silicone resin or a fluorine resin for forming the coating layer, the thickness of the layer formed by these resins is preferably from 1 μm to 50 μm, and more preferably from 10 μm to 30 μm.

Further, in order to obtain the pressure (nip pressure), for example, an elastic member such as a spring or the like having tension may be selected and arranged at both ends of a roller such as a heat-pressurizing roller so as to obtain a desired nip pressure in light of a nipping distance.

When a heat-pressurizing roller or a heat-pressurizing belt is used, the conveying speed of the recording medium is preferably from 200 smm/second to 700 mm/second, more preferably from 300 mm/second to 650 mm/second, and still preferably from 400 mm/second to 600 mm/second.

*Treatment liquid-applying process*

The image forming method of the invention includes preferably a treatment liquid-applying process in addition to the ink-applying process and heat-fixing process from the viewpoint of high-speed image formation.
In the treatment liquid-applying process, a treatment liquid capable of forming aggregates by being brought into contact with an ink composition is applied to a recording medium, and aggregates containing water-insoluble coloring particles are formed by bringing the treatment liquid into contact with the ink composition, thereby forming an image. In this case, dispersed particles such as composite particles or water-insoluble coloring particles in the ink composition are aggregated, thereby fixing an image on the recording medium. In addition, details of each component in the treatment liquid and preferable embodiments are described above.

The application of the treatment liquid may be performed using known methods such as a coating method, an inkjet method, an immerse method, or the like. As the coating method, known coating methods may be performed using a bar coater, an extrusion die coater, an air doctor coater, a blade coater, a rod coater, a knife coater, a squeeze coater, a reverse roll coater, or the like. Details of the inkjet method are described above.

The treatment liquid-applying process may be performed either before or after the ink-applying process using the ink composition.
In the invention, an embodiment where the ink-applying process is performed after applying the treatment liquid in the treatment liquid-applying process is preferable. That is, an embodiment, where a treatment liquid for aggregating water-insoluble coloring particles in the ink composition is applied to a recording medium beforehand, prior to the application of an ink composition, and an image is formed by applying the ink composition so as to come into contact with the treatment liquid applied onto the recording medium, is preferred. In this way, the inkjet recording can be performed at faster speed, and an image with high density and high resolution can be obtained even if the image is recorded at high speed.

The application amount of the treatment liquid is not particularly restricted, as long as the treatment liquid is capable of aggregating the ink composition. However, the application amount of the aggregating component (for example, divalent or higher valent carboxylic acid or a cationic organic compound) is preferably 0.1 $g/m^2$ or more. In particular, the application amount of the aggregating component is preferably from 0.1 $g/m^2$ to 1.0 $g/m^2$, and more preferably from 0.2 $g/m^2$ to 0.8 $g/m^2$. When the application amount of the aggregating component is 0.1 $g/m^2$ or more, an aggregating reaction proceeds favorably, and when the application amount of the aggregating component is 1.0 $g/m^2$ or less, it is preferable that the glossiness be not too high.

Further, in the invention, it is preferable that the ink-applying process is performed after the treatment liquid-applying process, and a heat-drying process for heat-drying the treatment liquid on the recording medium is further performed in the period between after the application of the treatment liquid onto the recording medium and until the application of the ink composition onto the recording medium. When heat-drying the treatment liquid beforehand prior to the ink-applying process, ink coloring properties such as ink bleed-preventive property can be improved, whereby a visible image having good color density and color hue can be recorded.

The heat-drying can be performed using a known heating unit such as a heater, or the like, an air-blowing unit using an air-blow such as a dryer or the like, or a unit combining these. Examples of heating methods include a method of applying heat with a heater or the like from the opposite side of the recording medium to the surface on which the treatment liquid is applied, a method of applying warm air or hot air to the surface of the recording medium on which the treatment liquid is applied, and a method of heating using an infrared heater. These methods may be used in combination.

*Recording medium*

The inkjet recording method of the invention records an image on a recording medium.
The recording medium is not particularly restricted, and general printing paper, which is mainly made of cellulose such as so-called high-quality paper, coat paper, art paper or the like used in the general offset printing, may be used. When

performing an image recording by a general inkjet printing method using an aqueous ink, the ink is relatively slowly absorbed and dried in the general printing paper made of mainly cellulose, and therefore, the colorant is easily moved after ink droplets are jetted, thereby reducing the image quality. However, in the inkjet recording method according to the invention, the movement of the colorant can be suppressed, thereby enabling high quality image recording with excellent color density and color hue.

Recording media that are generally commercially available can be used as the recording medium, and examples include high-quality paper (A) such as Prince WOOD FREE (trade name, produced by Oji Paper Co., Ltd.), SHIRAOI (trade name, produced by Nippon Paper Industries Co., Ltd.) and New NPI High Quality (trade name, produced by Nippon Paper Industries Co., Ltd.), very light-weight coated paper such as EVER LIGHT COATED (trade name, produced by Oji Paper Co., Ltd.) and AURORA S (trade name, produced by Nippon Paper Industries Co., Ltd.), light-weight coated paper (A3) such as TOPKOTE (L) (trade name, produced by Oji Paper Co., Ltd.) and AUROA L (trade name, produced by Nippon Paper Industries Co., Ltd.), coated paper (A2, B2) such as TOPKOTE PLUS (trade name, produced by Oji Paper Co., Ltd.) and AURORA COAT (trade name, produced by Nippon Paper Industries Co., Ltd.) and art paper (A1) such as 2/SIDE GOLDEN CASK GLOSS (trade name, produced by Oji Paper Co., Ltd.) and TOKUBISHI ART (trade name, produced by Mitsubishi Paper Mills Limited). Further, different kinds of photographic paper for inkjet recording can be used.

Among these, in view of obtaining a high-quality image with more effective suppression of movement of coloring material and more favorable color density and hue than conventionally, a recording medium having a water absorption coefficient Ka of from 0.05 to 0.5 $mL/m^2 \cdot ms^{1/2}$ is preferable, a recording medium having a water absorption coefficient Ka of from 0.1 to 0.4 $mL/m^2 \cdot ms^{1/2}$ is more preferable, and a recording medium having a water absorption coefficient Ka of from 0.2 to 0.3 $mL/m^2 \cdot ms^{1/2}$ is yet more preferable.

The water absorption coefficient Ka refers to that described in the JAPAN TAPPI Paper and Pulp Testing Method No. 51: 2000 (published by JAPAN TAPPI) and, specifically, the absorption coefficient Ka is calculated from the difference between the transfer amount of water at a contact time of 100 ms and that at a contact time of 900 ms measured by an Automatic Scanning Liquid Absorptometer KM500win (manufactured by Kumagai Riki Kogyo Co., Ltd.).

Among the recording media, so-called coated paper generally used in the offset printing is preferable. The coated paper includes a coat layer which is formed by applying a coating material on a surface of high-quality paper, neutral paper or the like which are mainly made of cellulose and are not generally surface-treated. In the image formation by a general aqueous inkjet method, the coated paper tends to cause problems in quality such as the glossiness or rubbing resistance of an image. However, in the inkjet recording method according to the invention, an image having excellent glossiness with suppressed uneven glossiness, and excellent rubbing resistance can be obtained. In particular, it is preferable that coated paper having base paper and a coat layer containing kaolin and/or calcium bicarbonate is used. More specifically, art paper, coated paper, lightweight coated paper or very lightweight coated paper is desirable.

## EXAMPLES

Hereinafter, the invention is described in more detail by way of Examples, but the invention is not intended to be limited to these. Particularly, unless otherwise specified, the term "part" and "%" are mass basis.

### *Preparation of polymer aqueous dispersion*

#### *Preparation Example 1*

*- Synthesis of self- dispersing polymer -*

Methylethyl ketone (560.0 g) was placed in a 2L three-necked flask equipped with a stirrer, a thermometer, a reflux condenser and a nitrogen gas introduction tube, and the temperature was raised to 87°C in a nitrogen atmosphere. While maintaining a refluxing state inside of the reaction vessel (thereafter, the refluxing state was maintained until the reaction was terminated), a mixed solution of 272.6 g of methylmethacrylate, 58.0 g of 2-methoxyethyl acrylate, 203.0 g of benzyl methacrylate, 46.4 g of methacrylic acid, 108 g of methylethyl ketone and 2.32 g of "V-601" (trade name; manufactured by Wako Pure Chemical Industries, Ltd.) was added dropwise at a constant addition rate to the reaction vessel so as to complete the addition in two hours. The mixture was stirred for one hour after completion of the addition, thereafter, (1) a process, in which a solution containing 1.16 g of "V-601" and 6.4 g of methylethyl ketone was added to the mixture, and resultant mixture was stirred for 2 hours, was preformed. Thereafter, the process (1) was repeated four times, and further, a solution containing 1.16 g of "V-601" and 6.4 g of methylethyl ketone was added to the mixture and resultant mixture was further stirred for three hours. The weight average molecular weight (Mw) of the copolymer thus obtained was 56,000 (calculated in terms of polystyrene by the measurement by a gel permeation chromatographic (GPC) method using the columns of TSK gel SuperHZM-H, TSKgel SuperHZ4000 and TSKgel SuperHZ200 (trade

names; manufactured by Tosoh Corp.)).

*Phase inversion process*

Next, 291.5 g (44.6 % of solid content concentration) of the obtained polymer solution (first polymer solution) was weighed, and 82.5 g of isopropanol, 3.25 g of 20% aqueous maleic acid solution (water-soluble electrolyte; equivalent to 0.5 % with respect to the copolymer), and 73.92 g of 1 mol/L NaOH aqueous solution were added to the polymer solution, and the temperature inside of the reaction vessel was raised to 87°C. Next, 352 g of distilled water was added to the mixture at a rate of 10 mL/minute to form an aqueous dispersion (dispersing process). Thereafter, after the temperature inside of the reaction vessel was maintained at 87°C for one hour, at 91 °C for one hour, and at 95°C for 30 minutes under atmospheric pressure, the pressure inside of the reaction vessel was reduced, and the total amount of 287.0 g of isopropanol, methylethyl ketone and distilled water was distilled away (solvent removing process), so that a polymer aqueous dispersion (C-01Lx1) containing a self-dispersing polymer (C-01) having a solid content concentration of 26.5 % was obtained.
The numeral of each structural unit in the following Exemplary Compound (C-01) represents a mass ratio. Hereinafter, the same applies to other structural Formulae.
Further, a polymer aqueous dispersion (C-01Lx2) containing a self-dispersing polymer (C-01) was obtained in a manner similar to the above method, except that the water-soluble electrolyte was changed to the kind and addition amount of the water-soluble electrolytes shown in Table 1.
(C-01)

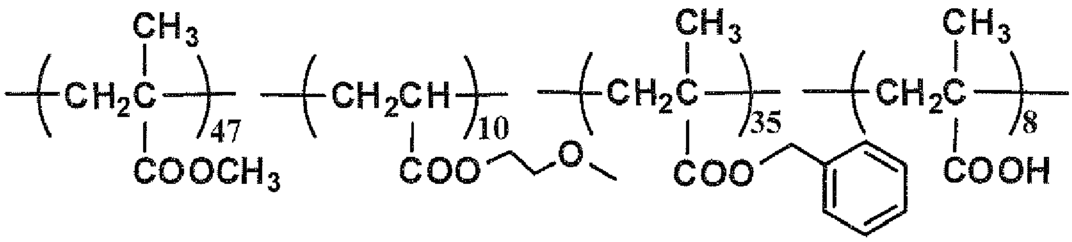

*Preparation Example 2*

65 g of JONCRYL 67 (trade name (styrene acrylic resin); manufactured by BASF SE) was weighed and placed in a 1L three-necked flask equipped with a stirrer, a thermometer, a reflux condenser and a nitrogen gas introduction tube, and 65 g of methyl ethyl ketone, 65 g of isopropanol, 0.98 g of 20 % maleic acid aqueous solution (water-soluble electrolyte; equivalent to 0.3 % with respect to the copolymer), and 190.58 g of 1 mol/L NaOH aqueous solution were added to the reaction vessel, and the temperature inside of the reaction vessel was raised to 87°C. Next, 93 g of distilled water was added to the mixture at a rate of 6 mL/minute to form an aqueous dispersion. Thereafter, after the temperature inside of the reaction vessel was maintained at 87°C for one hour, at 91°C for one hour, and at 95°C for 30 minutes under atmospheric pressure, the pressure inside of the reaction vessel was reduced, and the total amount of 195.5 g of isopropanol, methylethyl ketone and distilled water was distilled away, so that a polymer aqueous dispersion (Jcr67Lx1) containing a self-dispersing polymer having a solid content concentration of 22.3 % was obtained. The physical properties of the obtained polymer aqueous dispersion (Jcr67Lx1) are shown in Table 1.
Further, a polymer aqueous dispersion (Jcr67Lx2) was obtained in a manner similar to the above method, except that the water-soluble electrolyte was changed to the kind and addition amount of the water-soluble electrolytes shown in Table 1.

*Preparation Example 3*

In the preparation of the polymer aqueous dispersion (Jcr67Lx1) in Preparation Example 2, polymer aqueous dispersions of self-dispersing polymers (Jcr611) and (Jcr690) were obtained in a manner similar to Preparation Example 2, except that JONCRYL 67 was changed to JONCRYL 611 and JONCRYL 690 (trade names (both are styrene acrylic resins, carboxyl group-containing polymer); manufactured by BASF SE), the kinds and addition amounts of the water-soluble electrolyte were changed to those described in Table 1, and the addition amount of the aqueous NaOH solution was changed so as to be the same neutralization degree. The physical properties of the obtained polymer aqueous

dispersions (Jcr611Lx1), (Jcr611Lx2), (Jcr690Lx1) and (Jcr690Lx2) are shown in Table 1.

*Preparation Example 4*

Polymer aqueous dispersions of self-dispersing polymers (C-03) and (C-04) were obtained in a manner similar to the synthesis of Exemplary Compound (C-01) in Preparation Example 4, except that 272.6 g of methyl methacrylate, 58.0 g of 2-methoxyethyl acrylate, 203.0 g of benzyl methacrylate, and 46.4 g of methacrylic acid were changed to following Exemplary Compounds (C-03) and (C-04) such that the kind and the charging amount of the monomers were changed to the structure and the weight ratio in Exemplary Compounds (C-03) and (C-04), and with this change, the addition amount of the neutralizing base was changed so as to have the same neutralization degree. The physical properties of the obtained polymer aqueous dispersions (C-03Lx1), (C-04Lx1) and (C-04Lx2) are shown in Table 1. The weight average molecular weights (Mw) of the self-dispersing polymers (C-03) and (C-04) were 38,000 and 44,000, respectively. The numeral of each structural unit of the following Exemplary Compounds represents the mass ratio.

(C-03)

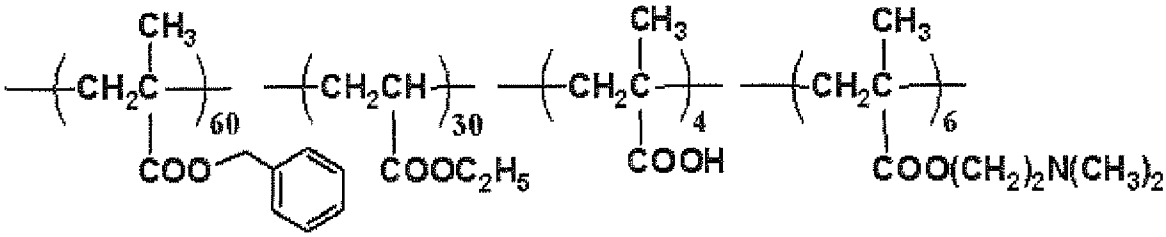

(C-04)

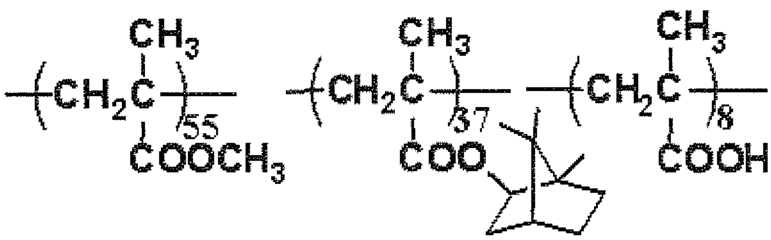

TABLE 1

| | First Polymer | Water-soluble electrolyte | | Tg(°C) | Particle diameter (mm) | Weight average molecular weight (Mw) |
|---|---|---|---|---|---|---|
| | | Kind | Addition amount (%) | | | |
| C-01Lx1 | C-01 | Maleic acid | 0.5 | 44 | 4.8 | 56,000 |
| C-01Lx2 | C-01 | $Na_2SO_4$ | 1.0 | 44 | 20 | 56,000 |
| Jcr67Lx1 | Jcr67 | Meleic acid | 0.3 | 73 | 2.2 | 12,500 |
| Jcr67Lx2 | Jcr67 | Citric acid | 7.5 | 73 | 14 | 12,500 |
| Jcr611Lx1 | Jcr611 | NaCl | 0.3 | 50 | 1.8 | 8,100 |
| Jcr611Lx2 | Jcr611 | Na maleate | 0.007 | 50 | 1.2 | 8,100 |
| Jcr690Lx1 | Jcr690 | Malic acid | 0.6 | 102 | 10 | 16,500 |
| Jcr690Lx2 | Jcr690 | Malonic acid | 10.3 | 102 | 76 | 16,500 |

(continued)

| | First Polymer | Water-soluble electrolyte | | Tg(°C) | Particle diameter (mm) | Weight average molecular weight (Mw) |
|---|---|---|---|---|---|---|
| | | Kind | Addition amount (%) | | | |
| C-03Lx1 | C-03 | Tartaric acid | 1.5 | 24 | 24 | 38,000 |
| C-04Lx1 | C-04 | Citric acid | 0.7 | 120 | 18 | 44,000 |
| C-04Lx2 | C-04 | Maleic acid | 0.4 | 120 | 9.6 | 44,000 |
| Jcr683Lx1 | Jcr683 | - | - | 75 | 2.6 | 8,000 |
| Jcr690Lx3 | Jcr690 | Maleic acid | 0.4 | 102 | 9.8 | 16,500 |

In addition, the abbreviations in Table 1 are as follows:

Jcr67: JONCRYL 67 (trade name (styrene acrylic resin); manufactured by BASF SE);
Jcr611: JONCRYL 611 (trade name (styrene acrylic resin); manufactured by BASF SE);
Jcr683: JONCRYL 683 (trade name (styrene acrylic resin); manufactured by BASF SE);
Jcr690: JONCRYL 690 (trade name (styrene acrylic resin); manufactured by BASF SE);
$Na_2SO_4$: sodium sulfate; and
NaCl: sodium chloride.

The particle diameter shown in Table 1 is the volume average particle diameter measured with a dynamic light scattering method within 24 hours after the polymer aqueous dispersion is prepared. The particle diameter is a value measured with MICROTRAC UPA EX-150 (trade name; manufactured by Nikkiso Co., Ltd.) in the conventional way. Further, a glass transition temperature (Tg) is the value obtained by measuring the polymer solid content using a differential scanning calorimeter (DSC) EXSTAR6220 manufactured by SII NanoTechnology, Inc. As the measurement conditions, 5 mg of sample was sealed in an aluminum pan, the value of the peak top of the DDSC of measurement data at the second temperature increase in the following temperature profile under nitrogen atmosphere was defined as Tg for each polymer:

- Temperature profile -

30°C → -50°C (cooled at a rate of 50°C/min.);
-50° → 230°C (temperature was raised at a rate of 20°C/min.);
230°C → -50°C (cooled at a rate of 50°C/min.); and
-50° → 230°C (temperature was raised at a rate of 20°C/min.).

*Preparation of composite particle*

*- Synthetic example 1 -*

In a 1L three-necked flask equipped with a stirrer and a reflux condenser, were placed 90.6 g of the polymer aqueous dispersion C-01Lx1 obtained in Preparation Example 1, 12.4 g of distilled water, and 0.72 g of triethylamine, and the mixture was heated to 70°C and stirred in a stream of nitrogen. To this mixture, was added an aqueous solution of 0.4 g of 2,2'-azobis(2-amidinopropane)dihydrochloride and 80 g of distilled water, and the resultant mixture was stirred for 30 minutes. Thereafter, a monomer solution containing 48 g of isobornyl methacrylate was added dropwise to the reaction vessel at a constant addition rate such that the addition is completed in two hours. After completing the dropwise addition, an aqueous solution of 0.2 g of 2,2'-azobis(2-amidinopropane)dihydrochloride and 20 g of distilled water was added to this mixture, and after the reaction liquid was stirred at 70°C for 4 hours, the temperature of the reaction liquid was raised to 85°C and the reaction liquid was further stirred for two hours. The reaction liquid was cooled and filtered, so that 236 g of an aqueous dispersion of composite particles (PL-01) containing the self-dispersing polymer (C-01) and the second polymer (B-01) was obtained. The solid content concentration of the aqueous dispersion thus obtained was 30.2 %, the volume average particle diameter of the composite particles was 59 nm (the particle diameter was measured with MICROTRAC UPA EX-150 (trade name; manufactured by Nikkiso Co., Ltd.)), and the weight average molecular

weight (Mw) was 152,000. The physical properties of the second polymer (B-01) and the composite particles (PL-01) are shown in Table 2.

*Synthetic Example 2*

Aqueous dispersions of composite particles (PL-02) to (PL-11) containing a carboxyl group-containing polymer and a water-insoluble polymer (second polymer) were obtained in a manner similar to the synthesis of Exemplary Compound (B-01)in Synthetic Example 1, except that the self-dispersing polymers as shown in Table 1 were used in place of the polymer aqueous dispersion (C-01Lx1), and the kind and the charging amount of the monomers were changed to have the structure and the weight ratio of Exemplary Compounds (B-02), (B-04) and (B-06), respectively, and with this change, the addition amount of triethyamine was changed so as to have the same neutralization degree. The physical properties of the obtained water-insoluble polymers and the composite particles are shown in Table 2.
(B-02)

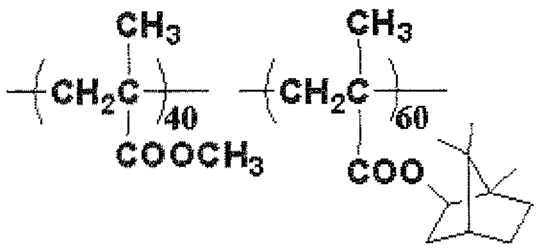

(B-04)

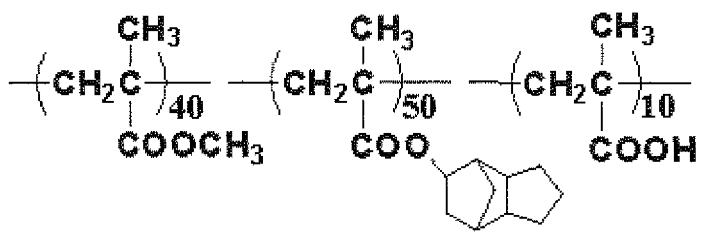

(B-06)

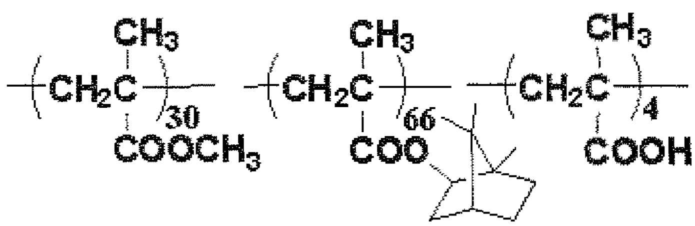

*Comparative Preparation Example 1*

A polymer aqueous dispersion (CH-01Lx) of a self-dispersing polymer (CH-01) was prepared without adding a water-soluble electrolyte, in accordance with the synthetic example 1 as recited in Paragraph No. [0055] of JP-A No. 2006-249282. In accordance with the example 1 as recited in Paragraph No. [0061] of JP-A No. 2006-249282, composite particles (PLH-01) containing a water-insoluble polymer (BH-01) and the self-dispersing polymer (CH-01) were obtained. The physical properties of CH-01, BH-01 and PLH-01 are shown in Table 2.
(CH-01)

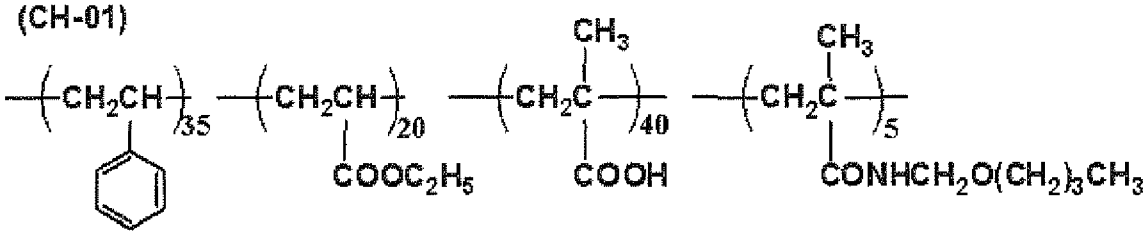

(BH-01)

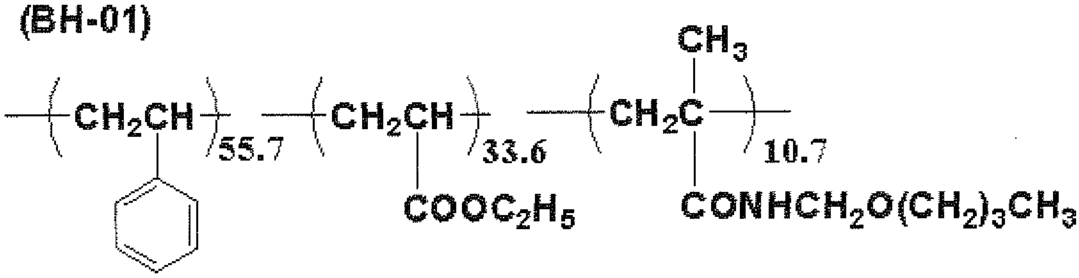

*Comparative Preparation Example 2*

In a 1L three-necked flask equipped with a stirrer and a reflux condenser, were placed 8.1 g of PIONIN A-43s (trade name; manufactured by Takemoto Oil & Fat Co., Ltd.), and 236.0 g of distilled water, and the mixture was heated to 70°C in a stream of nitrogen while stirring. To this mixture, were added 10 g of isobornyl methacrylate, 1.0 g of ammonium persulfate and 40 g of distilled water, and stirred for 30 minutes. Thereafter, a monomer solution containing 190 g of isobornyl methacrylate was added dropwise to the reaction vessel at a constant addition rate so as to complete the addition in two hours. After completing the dropwise addition, an aqueous solution of 0.5 g of ammonium persulfate and 20 g of distilled water was added to the mixture, and after stirring at 70°C for 4 hours, the temperature of the mixture was raised to 85°C and the mixture was further stirred for two hours. Thus-obtained reaction liquid was cooled and filtered, so that 505 g of an emulsified polymer latex PLH-02 containing a water-insoluble polymer (B-01) was obtained. The physical properties of PLH-02 are shown in Table 2.

*Comparative Preparation Example 3*

An aqueous dispersion of composite particles (PLH-03) containing a first polymer and a second polymer was obtained in a manner similar to the synthesis of Exemplary Compound (B-01) in Synthetic Example 1, except that a polymer aqueous dispersion (Jcr690Lx3) as shown in Table 1 as a polymer aqueous dispersion was used, and the kind and the charging amount of the monomers were changed to the structure and the weight ratio shown in Exemplary Compound (BH-03), and with this change, the addition amount of triethyamine was changed so as to have the same neutralization degree. The physical properties of the obtained second polymer and the composite particles are shown in Table 2.

(BH-03)

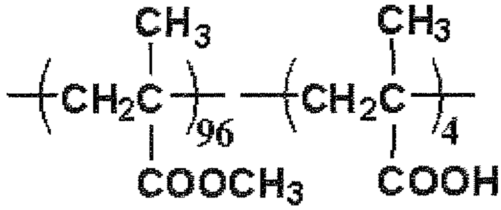

*Comparative Preparation Example 4*

*- Preparation of self- dispersing polymer aqueous dispersion -*

65 g of JONCRYL 683 (trade name (styrene acrylic resin); manufactured by BASF SE) was weighed and placed in a 1L three-necked flask equipped with a stirrer, a thermometer, a reflux condenser and a nitrogen gas introduction tube, and 65 g of methyl ethyl ketone, 65 g of isopropanol, and 254.73 g of 1 mol/L NaOH aqueous solution were added to the reaction vessel, and the temperature inside of the reaction vessel was raised to 87°C. Next, 22 g of distilled water was added dropwise to the mixture at a rate of 6 mL/minute without adding a water-soluble electrolyte to form an aqueous dispersion. Thereafter, after the temperature inside of the reaction vessel was maintained at 87°C for one hour, at 91 °C for one hour, and at 95°C for 30 minutes under atmospheric pressure, the pressure inside of the reaction vessel was reduced, so that the total amount of 210.5 g of isopropanol, methylethyl ketone and distilled water was distilled away, thereby obtaining a polymer aqueous dispersion (Jcr683Lx1) containing a self-dispersing polymer having a solid content concentration of 22.0 %. The physical properties of the obtained aqueous dispersion (Jcr683Lx1) containing the self-dispersing polymer are shown in Table 1.

*Synthetic Example of Composite Particles*

An aqueous dispersion of composite particles (PLH-04) containing the first polymer and the second polymer was obtained in a manner similar to the synthesis of Exemplary Compound (B-01) in Synthetic Example 1, Jcr683Lx1 obtained above was used as a polymer aqueous dispersion, and the kinds and the charging amounts of the monomers were changed to the structure and the weight ratio shown in Exemplary Compound (BH-02), and with this change, the addition amount of triethyamine was changed so as to have the same neutralization degree. The physical properties of the obtained second polymer and the composite particles are shown in Table 2.

Table 2

| | First Polymer (C) | Polymer Aqueous Dispersion | Second Polymer (B) | Tg (°C) | | | Particle Diameter (nm) | Weight Average Particle Diameter (nm) | (B)/(C) (w/w) | Stability | Remarks |
|---|---|---|---|---|---|---|---|---|---|---|---|
| | | | | (C) | (B) | \|(B) -(C)\| | | | | | |
| PL-01 | C-01 | C-01Lx1 | B-01 | 44 | 180 | 136 | 59 | 152,000 | 2/1 | A | Present Invention |
| PL-02 | Jcr67 | Jcr67Lx1 | B-02 | 73 | 152 | 79 | 48 | 148,000 | 2/1 | A | Present Invention |
| PL-03 | Jcr611 | Jcr611Lx1 | B-04 | 50 | 136 | 86 | 66 | 170,000 | 3/1 | A | Present Invention |
| PL-04 | Jcr690 | Jcr690Lx1 | B-06 | 102 | 164 | 62 | 40 | 118,000 | 1/1 | A | Present Invention |
| PL-05 | C-03 | C-03Lx1 | B-01 | 24 | 180 | 156 | 52 | 82,000 | 1/2 | A | Present Invention |
| PL-06 | C-01 | C-01Lx2 | B-02 | 44 | 152 | 108 | 48 | 79,000 | 1/2 | A | Present Invention |
| PL-07 | C-04 | C-04Lx1 | B-02 | 120 | 152 | 32 | 73 | 181,000 | 3/1 | A | Present Invention |
| PL-08 | Jcr67 | Jcr67Lx2 | B-04 | 73 | 136 | 63 | 72 | 147,000 | 2/1 | A | Present Invention |
| PL-09 | C-04 | C-04Lx2 | B-04 | 120 | 136 | 16 | 51 | 108,000 | 1/1 | A | Present Invention |
| PL-10 | Jcr690 | Jcr690Lx2 | B-06 | 24 | 164 | 140 | 79 | 111,000 | 1/1 | B | Present Invention |
| PL-11 | Jcr611 | Jcr611Lx2 | B-01 | 44 | 180 | 136 | 50 | 154,000 | 2/1 | B | Present Invention |
| PLH-01 | CH-01 | CH-01Lx | BH-01 | 82 | 46 | 36 | 80 | 80,000 | 7/20 | B | Comparative Example |
| PLH-02* | - | - | BH-02 | - | 180 | 180 | 75 | 286,000 | Only (B) | C | Comparative Example |

(continued)

| | First Polymer (C) | Polymer Aqueous Dispersion | Second Polymer (B) | Tg (°C) | | | Particle Diameter (nm) | Weight Average Particle Diameter (nm) | (B)/(C) (w/w) | Stability | Remarks |
|---|---|---|---|---|---|---|---|---|---|---|---|
| | | | | (C) | (B) | \|(B) -(C)\| | | | | | |
| PLH-03 | Jcr690 | Jcr690Lx3 | BH-03 | 102 | 108 | 6 | 90 | 112,000 | 1/1 | B | Comparative Example |
| PLH-04 | Jcr683 | Jcr683Lx1 | B-02 | 75 | 152 | 77 | 77 | 109,000 | 1/1 | A | Comparative Example |
| *Emulsified polymerization particles | | | | | | | | | | | |

The particle diameters shown in Table 2 were measured in a manner similar to the measurement of the polymer aqueous dispersion within 24 hours after production of the aqueous dispersions of the composite particles. Further, the glass transition temperature (Tg) was measured in a manner similar to the measurement of the polymer aqueous dispersion.

The stability of the aqueous dispersion of the composite particles obtained in the above was evaluated in the following manner.

After 10 mL the aqueous dispersions each were placed in a 15 mL glass bottle, the bottle was air-tightly stoppered, and was allowed to stand at 60°C for 14 days, the average particle diameter was measured. The variation rate of the average particle diameter before and after the aqueous dispersion was allows to stand ((average particle diameter after the aqueous dispersion was allows to stand) - (average particle diameter before the aqueous dispersion was allows to stand))/ (average particle diameter before the aqueous dispersion was allows to stand) was calculated, and evaluated in accordance with the following evaluation criteria. The evaluation results are shown Table 2.

The measurement before the aqueous dispersion was allowed to stand was performed at room temperature within 24 hours after the aqueous dispersion of the composite particles was prepared.

*Evaluation criteria*

A: variation rate of average particle diameter was less than 10 %;
B: variation rate of average particle diameter was from 10 % to less than 50 %; and
C: variation rate of average particle diameter was 50 % or more.

*Example 1*

*Preparation of aqueous ink composition*

*(Preparation of Cyan Ink C-1*)

(*Preparation of cyan dispersion liquid as water-insoluble coloring particles*)

A mixed solution of 6 parts of styrene, 11 parts of stearyl methacrylate, 4 parts of styrene macromer AS-6 (trade name; manufactured by Toagosei Co., Ltd.), 5 parts of BLEMMER PP-500 (trade name; manufactured by NOF Corporation), 5 parts of methacrylic acid, 0.05 parts of 2-mercaptoethanol and 24 parts of methylethyl ketone was prepared in a reaction vessel.

Another mixed solution of 14 parts of styrene, 24 parts of stearyl methacrylate, 9 parts of styrene macromer AS-6 (trade name; manufactured by Toagosei Co., Ltd.), 9 parts of BLEMMER PP-500 (trade name; manufactured by NOF Corporation), 10 parts of methacrylic acid, 0.13 parts of 2-mercaptoethanol, 56 parts of methylethyl ketone, and 1.2 parts of 2,2'-azobis(2,4-dimethylvaleronitrile) was prepared and placed in a dropping funnel.

Subsequently, the temperature of the mixed solution in the reaction vessel was raised to 75°C while stirring under nitrogen atmosphere, and the mixed solution in the dropping funnel was gradually dropped into the reaction vessel over one hour. After the time passage of two hours from the completion of the dropwise addition, a solution, in which 1.2 parts of 2,2'-azobis(2,4-dimethylvaleronitrile) was dissolved in 12 parts of methyl ethyl ketone, was dropped over three hours, and the mixture was ripened at 75°C for two hours, and further, at 80°C for two hours, thereby obtaining a polymer dispersant solution.

A part of the obtained polymer dispersant solution was isolated by removing the solvent, and the obtained solid content was diluted with tetrahydrofuran to a concentration of 0.1 %, and the weight average molecular weight was measured with a GPC. As a result, a weight average molecular weight of the isolated solid was found to be 25,000 in terms of polystyrene.

Further, 5.0 g in terms of solid content of the polymer dispersant solution thus obtained, 10.0 g of Pigment Blue 15:3 ((cyan pigment) manufactured by Dainichiseika Color & Chemicals Mfg. Co., Ltd.), 40.0 g of methylethyl ketone, 8.0 g of 1 mol/L sodium hydroxide, 82.0 g of ion exchange water and 300 g of zirconia beads with a diameter of 0.1 mm were supplied to the vessel, and the mixture was dispersed using READY MILL (trade name; manufactured by Aimex Co., Ltd.) at 1,000 rpm for 6 hours. The obtained dispersion liquid was concentrated under reduced pressure using an evaporator until methylethyl ketone was sufficiently distilled away, and was concentrated to a pigment concentration of 10 %, thereby forming Cyan Dispersion Liquid C1 as water-insoluble coloring particles. The volume average particle diameter of the obtained Cyan Dispersion Liquid C1 was 77 nm.

Cyan Dispersion Liquid C1 as water-insoluble coloring particles and PL-01 as an aqueous dispersion of the

composite particles were mixed so as to have the following ink composition, and thereafter, coarse particles were removed with a 5 μm filter, so that Cyan Ink C-1 as an aqueous ink composition was prepared.

*Ink composition of Cyan Ink C-1*

- · cyan pigment (Pigment Blue 15:3, manufactured by Dainichiseika Color & Chemicals Mfg. Co., Ltd.) 4 %
- · above polymer dispersant (in terms of solid content) 2 %
- · PL-01 (in terms of solid content) 8 %
- · diethyleneglycol monoethyl ether (water-soluble solvent; manufactured by Wako Pure Chemical Industries, Ltd.) 10 %
- · SANNIX (NEWPOL)GP250 (trade name (water-soluble solvent); manufactured by Sanyo Chemical Industries, Ltd. 5 %
- · OLFINE E1010 (trade name; Nisshin Chemical Industry Co., Ltd.) 1 %
- · Ion exchange water added such that the total amount was 100 %

*Preparation of Cyan Inks C-2 to C-10 and CH-1 to CH-4)*

Cyan Inks C-2 to C-10 and CH-1 to CH-5 as aqueous ink compositions each were prepared in a manner similar to the preparation of Cyan Ink C-1, except that each of the following aqueous dispersions of the composite particles as shown in the following Table 3 was used in place of Aqueous Dispersion PL-01 of composite particles used in Cyan Ink C-1. Cyan Ink CH-5 was prepared without using an aqueous dispersion of composite particles. The physical properties of the obtained cyan inks immediately after the preparation (within 24 hours) are shown in Table 3.

TABLE 3

| Cyan ink | Composite particle | Viscosity | Particle diameter (nm) | Remarks |
|---|---|---|---|---|
| C-1 | PL-01 | A | 85 | Present Invention |
| C-2 | PL-02 | A | 88 | Present Invention |
| C-3 | PL-03 | A | 86 | Present Invention |
| C-4 | PL-04 | A | 91 | Present Invention |
| C-5 | PL-05 | A | 90 | Present Invention |
| C-6 | PL-06 | A | 92 | Present Invention |
| C-7 | PL-07 | A | 90 | Present Invention |
| C-8 | PL-08 | A | 91 | Present Invention |
| C-9 | PL-09 | A | 87 | Present Invention |
| C-10 | PL-10 | A | 8 | Present Invention |
| C-11 | PL-11 | A | 91 | Present Invention |
| CH-1 | PLH-01 | C | 108 | Comparative Example |
| CH-2 | PLH-02 | B | 111 | Comparative Example |
| CH-3 | PLH-03 | B | 102 | Comparative Example |
| CH-4 | PLH-04 | A | 88 | Comparative Example |
| CH-5 | - | B | 112 | Comparative Example |

The viscosities in Table 3 are evaluated in accordance with the following criteria:

*Evaluation criteria*

A: less than 6.5 mPa·s;

B: 6.5 mPa·s to less than 10 mPa·s; and

C: 10 mPa·s or higher.

*Preparation of treatment liquid*

A treatment liquid was prepared by mixing the following components. The treatment liquid have physical properties of viscosity of 2.b mPa·s, a surface tension of 37.3 mN/m and pH of 1.6 (25°C).

Composition of treatment liquid

- · Malonic acid (divalent carboxylic acid; manufactured by Wako Pure Chemical Industries, Ltd.): 15.0 %
- · Diethylene glycol monomethyl ether (manufactured by Wako Pure Chemical Industries, Ltd.): 20.0 %
- · Sodium N-oleoyl-N-methyl taurate (surfactant): 1.0 %
- · Ion exchange water: 64.0 %

*Evaluation*

The cyan inks prepared above (hereinafter, may be simply referred to as an "ink") each were subjected to an ink stability test with the passage of time, an ink jetting stability test, an ink jetting accuracy test, and an image fixability test (blocking resistance test and rub resistance test). The ink stability test with the passage of time is a test for evaluating the stability of the particle diameter or viscosity of ink before ink is jetted, namely, when the ink is accommodated in an ink storage container (or an ink cartridge). When the stability is poor, problems such as clogging of an ink jetting nozzle occur when the ink is jetted from the ink jetting nozzle of an inkjet apparatus. The ink jetting stability test is a stability test in continuous ink jetting, When the ink viscosity is high, ink clogging in a nozzle occurs, resulting in deterioration of ink jetting direction. The ink jetting accuracy test is a stability test for an ink jetting direction. When the dispersion stability of the aqueous ink composition is poor, the jetting accuracy is low. Further, in an image forming test, when the interaction between image films is strong, the blocking resistance is deteriorated, and when film formability is poor, the rub resistance is deteriorated.

*Stability test with the passage of time*

The inks (10 mL) each are placed in a 15 mL glass bottle, the bottle was air-tightly stoppered. After the inks each were allowed to stand (1) at 60°C for 14 days, and (2) at 40°C for three months, the average particle diameter and the viscosity each were measured. The variation rate of the average particle diameter before and after the ink was allowed to stand ((average particle diameter after the ink was allowed to stand) - (average particle diameter before the ink was allowed to stand))/(average particle diameter before the ink was allowed to stand), and the variation rate of the viscosity ((viscosity after the ink was allowed to stand) - (viscosity before the ink was allowed to stand))/(viscosity before the ink was allowed to stand each were calculated, and evaluated in accordance with the following evaluation criteria. The measurement before the aqueous dispersion was allowed to stand was performed within 24 hours at room temperature after the ink composition was prepared.

*Evaluation criteria*

A: variation rate of the average particle diameter or variation rate of the viscosity was less than 5 %;
B: variation rate of the average particle diameter or variation rate of the viscosity was from 5 % to less than 10 %; and
C: variation rate of the average particle diameter or variation rate of the viscosity was from 10 % or more.

When an ink was not usable, the ink was rated as "D". The results are shown in Table 4.

*Ink jetting stability test*

The ink jetting test was performed in the following manner. Ink was jetted on DOUBLE-SIDED TOKUBISHI ART N (trade name; manufactured by Mitsubishi Paper Mills, Ltd.) by GELJET G717 PRINTER HEAD (trade name; manufactured by Ricoh Co., Ltd.) such that the ink jetting amount was 12 pL, and the resolution was 1,200 dpi × 600 dpi. The Ink jetting stability was evaluated by observing the state 5 hours after the ink had been continuously jetted. The results of the ink jetting stability test are shown in Table 4. The evaluation criteria for the ink jetting stability test are as follows. When an ink was not usable, the ink was rated as "D".

*Evaluation criteria*

A: faulty ink jetting and faulty ink jetting direction were not observed;
B: faulty ink jetting was not observed; however faulty ink jetting direction was slightly observed;
C: faulty ink jetting was scarcely observed; however faulty ink jetting direction was slightly observed;
D: faulty ejection was remarkably observed.

*Jetting accuracy test*

*-Initial pitch evaluation -*

Lines (16 lines) with one dot having a length of 120 mm were printed. Subsequently, a distance between the lines at the position of 50 mm from the jetting initiation position of the printed sample was measured with DOT ANALYZER DA-6000 (trade name; manufactured by Oji Scientific Instruments). The standard deviation of the distance between the lines measured was calculated as a jetting deviation. The deviation is used as an index of the jetting direction, and the jetting accuracy was evaluated in accordance with the following evaluation criteria. The results are shown in Table 4.

*Printing conditions*

Printer: DMP-2831 (trade name; manufactured by Dimatix, Inc.);
Ink quantity: 10 pL;
Image resolution: 100 dpi in a nozzle array direction and 3,200 dpi in a conveyance direction;
Jetting frequency: 24 KHz; and
Recording medium: GASAI PHOTOFINISH PRO (trade name; manufactured by Fujifilm Corporation).

*Evaluation criteria*

A: less than 5 μm;
B: from 5 μm to less than 10 μm; and
C: 10 μm or more.

*Image formation and evaluation*

GELJET GX5000 PRINTER HEAD (trade name; manufactured by Ricoh Co., Ltd.), in which a storage tank connected to the printer head was refilled with the cyan ink obtained above, was used. DOUBLE-SIDED TOKUBISHI ART N (trade name; manufactured by Mitsubishi Paper Mills, Ltd.) as a recording medium was mounted on a stage movable in the predetermined linear direction at a speed of 500 mm/second, and a temperature of the stage was maintained at 30°C, and the treatment liquid obtained above was coated on the recording medium using a bar coater so as to have a thickness of about 1.2 μm, and was dried at 50°C for two second immediately after the coating.
Subsequently, GELJET GX5000 PRINTER HEAD was fixed and arranged such that the ink jetting direction in which the line head was provided was obliquely arrayed at an angle of 75.7° (main scanning direction) with respect to the direction orthogonal to the moving direction (subscanning direction) of the stage, and the ink was jetted by a line method under the conditions of an ink droplet quantity of 2.4 pL, the jetting frequency of 24 kHz, and the resolution of 12,000 dpi ×

12,000 dpi, while moving the recording medium to the subscanning direction at a constant speed, thereby printing a cyan solid image.
Immediately after the printing, the recording medium was dried at 60°C for 3 seconds, and thereafter, was passed through between a pair of fixing rollers heated at 60°C so that the recording medium was subjected to a heat-fixing process at a nip pressure of 0.25 MPa and a nip width of 4 mm, thereby obtaining an evaluation sample.

*Blocking resistance test*

The obtained evaluation sample was cut into two sheet in a size of 3.5 cm × 4 cm, and the evaluation sample sheets were placed on a acrylic plate (7 mm in thickness) having a size of 10 cm x 10 cm such that the printed surfaces of the evaluation sample sheets faced each other, and ten sheets of unprinted DOUBLE-SIDED TOKUBISHI ART N (trade name; manufactured by Mitsubishi Paper Mills, Ltd.) which was cut into the same size as the evaluation sample sheets were placed on the evaluation sample sheets, and further, an acrylic plate (7 mm in thickness) having a size of 10 cm × 10 cm was placed on the ten sheets, and the stack thus prepared was allowed to stand under the conditions of 25°C and 50 % RH for 12 hours.
After the stack was allowed to stand, a weight of 1 Kg (equivalent to a load of 700 Kg/$m^2$) was placed on the uppermost acryl plate, and further, was allowed to stand for 24 hours.
Furthermore, after the stack was stored under the conditions of 25°C and 50 % RH for 2 hours, the sheets of unprinted DOUBLE-SIDED TOKUBISHI ART N paper (unprinted print paper) superposed on the evaluation sample sheets were stripped off. The ease of stripping-off, and the degree of adhesion of the unprinted print paper to the printed surface of the evaluation sample sheet after the stripping-off were visually observed, and evaluated in accordance with the following evaluation criteria.

*Evaluation criteria*

A: no occurrence of adhesion of the unprinted print paper to the printed surface was observed; and
B: occurrence of adhesion of the unprinted print paper to the printed surface and attached paper on the printed surface were visually observed.

*Rub resistance test*

OK TOPCOAT+ (trade name (recording medium); manufactured by Oji Paper Co., Ltd.) was mounted on a stage moving at a speed of 500 mm/ second, the treatment liquid was coated on the recording medium using a wire bar coater so as to have a thickness of about 1.2 μm, and was dried at 50°C for two seconds immediately after the coating. Thereafter, using GELJET GX5000 PRINTER HEAD (trade name; manufactured by Ricoh co., Ltd.) which was fixed and arranged obliquely (75.5°) with respect to the subscanning direction, a solid image was printed with the cyan ink by a line method under the conditions of a resolution of 12,000 dpi x 12,000 dpi, and an ink jetting quantity of 2.4 pL. Immediately after the printing, the recording medium was dried at 60°C for 3 seconds, and thereafter, was passed through between a pair of fixing rollers heated at 60°C so that the recording medium was subjected to a heat-fixing process at a nip pressure of 0.25 MPa and a nip width of 4 mm, thereby obtaining a print sample.
The print sample was rubbed for three times reciprocating strokes by a weight (470 g by weight, a size of 15 mm × 30 mm × 120 mm (equivalent to a load of 260 Kg/$m^2$)) which was wrapped with OK TOPCOAT+paper, the stripping-off of an image was visually observed, and evaluated in accordance with the following evaluation criteria.
In addition, when image stripping-off was not observed by rubbing for three reciprocating strokes, the print sample was rubbed for three more reciprocating strokes.

*Evaluation Criteria*

A: image stripping-off was not observed even if the print sample was rubbed for six reciprocating strokes;
B: image stripping-off on the print sample surface was not observed by rubbing for three reciprocating strokes, but image stripping-off was observed by rubbing for six reciprocating strokes; and
C: image stripping-off on the print sample surface was observed by rubbing for three reciprocating strokes.

TABLE 4

| Cyan ink | Composite particles | Test of stability with the passage of time | | | | Ink jetting stability | Ink jetting accuracy | Blocking resistance property | Rub resistance | Remarks |
|---|---|---|---|---|---|---|---|---|---|---|
| | | Viscosity | | Particle diameter | | | | | | |
| | | (1) | (2) | (1) | (2) | | | | | |
| C-1 | PL-01 | A | A | A | A | A | A | A | A | Present Invention |
| C-2 | PL-02 | A | A | A | A | A | A | A | A | Present Invention |
| C-3 | PL-03 | A | A | A | A | A | A | A | A | Present Invention |
| C-4 | PL-04 | A | A | A | A | A | A | A | A | Present Invention |
| C-5 | PL-05 | A | A | A | A | A | A | A | A | Present Invention |
| C-6 | PL-06 | A | A | A | A | A | A | A | A | Present Invention |
| C-7 | PL-07 | A | A | A | A | A | A | A | B | Present Invention |
| C-8 | PL-08 | A | A | A | A | A | A | A | A | Present Invention |
| C-9 | PL-09 | A | A | A | A | A | A | A | B | Present Invention |
| C-10 | PL-10 | A | B | B | B | A | B | A | A | Present Invention |
| C-11 | PL-11 | A | B | B | A | A | B | A | A | Present Invention |
| CH-1 | PLH-01 | A | C | A | B | D | C | C | C | Comparative Example |
| CH-2 | PLH-02 | B | C | B | C | D | C | A | C | Comparative Example |
| CH-3 | PLH-03 | A | A | A | A | A | A | C | B | Comparative Example |
| CH-4 | PLH-04 | A | B | B | B | A | C | A | B | Comparative Example |
| CH-5 | - | A | A | A | A | A | A | C | C | Comparative Example |

As shown in Table 4, the stability with the passage of time of each aqueous ink composition of the invention is excellent. On the other hand, Cyan Inks CH-1 and CH-2 each having low dispersion stability and high viscosity tend to increase viscosity and particle diameter with the passage of time. The aqueous ink compositions of the invention each have low ink viscosity and are excellent in the ink jetting stability without faulty ink jetting, whereas Cyan Inks CH-1 and CH-2 each having high viscosity and low dispersion stability have low ink jetting stability. Cyan Ink CH-3 containing composite particles prepared using a polymer aqueous dispersion without going through an electrolyte addition process is apt to have poor jetting accuracy. Further, Cyan Inks C-1 to C-11 containing an aqueous dispersion of composite particles according to the invention were excellent in fixability, whereas Cyan Ink CH-1 having a low Tg and a small difference between two kinds of composite particles in Tg is inferior to Cyan Inks C-1 to C-11 in both the blocking resistance and the rub resistance Cyan Ink CH-3 which contains low Tg of composite particles is inferior to Cyan Inks C-1 to C-11 in the blocking resistance. Further, Cyan Ink CH-5, in which an aqueous dispersion of composite particles is not contained in the aqueous ink composition, is significantly inferior to Cyan Inks C-1 to C-11 in the fixability.
As described above, it is understood that by using an ink composition containing an aqueous dispersion of composite particles manufactured by a specific manufacturing method, a nonconventional ink composition which has a high ink stability, stable jetting property, good blocking resistance and rub resistance can be provided.
According to the invention, an aqueous ink composition which is excellent in ink stability, ink jetting stability, and can suppress occurrence of blocking in a recording medium, on which an image has been recorded, and a manufacturing method of composite particles contained in the aqueous ink composition, an ink set containing the aqueous ink composition, and an image forming method can be provided.
Embodiments of the present invention include, but are not limited to, the following.

<1> An aqueous ink composition comprising:

composite particles; and
a colorant,

wherein the composite particles are prepared by polymerizing at least one monomer capable of forming a second polymer in the presence of a polymer aqueous dispersion, and the polymer aqueous dispersion is prepared by adding a water-soluble electrolyte selected from an acidic compound or a salt thereof to either a first-polymer solution containing a first polymer and a solvent which dissolves the first polymer, or a first-polymer dispersion obtained from the first-polymer solution and water; and
wherein the first polymer includes a hydrophilic structural unit and a hydrophobic structural unit, and at least one of the first polymer or the second polymer has a glass transition temperature of 120°C or higher.
<2> The aqueous ink composition according to <1>, wherein the composite particles have characteristics such that the composite particles are aggregated by a change in pH.
<3> The aqueous ink composition according to <1> or <2>, wherein the composite particles contain at least one of the first polymer and at least one of the second polymer, and an absolute value of a difference in the glass transition temperatures between the first polymer and the second polymer contained in the composite particles is 40°C or more.
<4> The aqueous ink composition according to any one of<1> to <3>, wherein the hydrophilic structural unit in the first polymer comprises at least one structural unit having a carboxyl group.
<5> The aqueous ink composition according to any one of <1> to <4>, wherein the hydrophobic structural unit in the first polymer comprises at least one structural unit derived from at least one of an acrylic ester monomer or a methacrylic ester monomer.
<6> A method of manufacturing composite particles comprising:

polymerizing at least one monomer capable of forming a second polymer, in the presence of a polymer aqueous dispersion, thereby obtaining composite particles containing a first polymer and the second polymer,
wherein the polymer aqueous dispersion is prepared by a manufacturing process including:

preparing a first-polymer solution that includes the first polymer and a solvent dissolving the first polymer;
preparing a dispersion of the first polymer using the first-polymer solution and water; and
adding a water-soluble electrolyte selected from an acidic compound or a salt thereof to at least one of the first-polymer solution or the dispersion of the first polymer,

wherein the first polymer includes a hydrophilic structural unit and a hydrophobic structural unit, and at least one of the first polymer or the second polymer has a glass transition temperature of 120°C or higher.

<7> The method of manufacturing composite particles according to <6>, wherein the composite particles are prepared

by emulsion-polymerizing at least one monomer capable of forming the second polymer in the presence of the polymer aqueous dispersion.
<8> The method of manufacturing composite particles according to <6> or <7>, wherein the content ratio of the water-soluble electrolyte is from 0.01 % by mass to 10 % by mass with respect to the first polymer in the polymer aqueous dispersion.
<9> The method of manufacturing composite particles according to any one of <6> to <8>, wherein the volume average particle diameter of the first polymer in the polymer aqueous dispersion is from 0.1 nm to 80 nm.
<10> An ink set comprising:

the aqueous ink composition according to any one of <1> to <5>; and
a treatment liquid capable of forming aggregates by being brought into contact with the aqueous ink composition.

<11> An image forming method comprising:

applying, to a recording medium, the aqueous ink composition according to any one of <1> to <5>; and
forming an image by heat-fixing the recording medium to which the aqueous ink composition has been applied.

<12> The image forming method according to <11>, further comprising;

applying, to the recording medium, a treatment liquid capable of forming aggregates by being brought into contact with the aqueous ink composition.

[0208] All publications, patent applications, and technical standards mentioned in this specification are herein incorporated by reference to the same extent as if each individual publication, patent application, or technical standard was specifically and individually indicated to be incorporated by reference.

## Claims

**1.** An aqueous ink composition comprising:

composite particles; and
a colorant,
wherein the composite particles are prepared by polymerizing at least one monomer capable of forming a second polymer in the presence of a polymer aqueous dispersion, and the polymer aqueous dispersion is prepared by adding a water-soluble electrolyte selected from an acidic compound or a salt thereof to either a first-polymer solution containing a first polymer and a solvent which dissolves the first polymer, or a first-polymer dispersion obtained from the first-polymer solution and water; and
wherein the first polymer includes a hydrophilic structural unit and a hydrophobic structural unit, and at least one of the first polymer or the second polymer has a glass transition temperature of 120°C or higher.

**2.** The aqueous ink composition according to claim 1, wherein the composite particles have characteristics such that the composite particles are aggregated by a change in pH.

**3.** The aqueous ink composition according to claim 1 or claim 2, wherein the composite particles contain at least one of the first polymer and at least one of the second polymer, and an absolute value of a difference in the glass transition temperatures between the first polymer and the second polymer contained in the composite particles is 40°C or more.

**4.** The aqueous ink composition according to any one of claims 1 to 3, wherein the hydrophilic structural unit in the first polymer comprises at least one kind of structural unit having a carboxyl group.

**5.** The aqueous ink composition according to any one of claims 1 to 4, wherein the hydrophobic structural unit in the first polymer comprises at least one kind of structural unit derived from at least one of an acrylic ester monomer or a methacrylic ester monomer.

**6.** A method of manufacturing composite particles comprising:

polymerizing at least one monomer capable of forming a second polymer, in the presence of a polymer aqueous dispersion, thereby obtaining composite particles containing a first polymer and the second polymer, wherein the polymer aqueous dispersion is prepared by a manufacturing process including:

preparing a first-polymer solution that includes the first polymer and a solvent dissolving the first polymer;
preparing a dispersion of the first polymer using the first-polymer solution and water; and
adding a water-soluble electrolyte selected from an acidic compound or a salt thereof to at least one of the first-polymer solution or the dispersion of the first polymer,

wherein the first polymer includes a hydrophilic structural unit and a hydrophobic structural unit, and at least one of the first polymer or the second polymer has a glass transition temperature of 120°C or higher.

**7.** The method of manufacturing composite particles according to claim 6, wherein the composite particles are prepared by emulsion-polymerizing at least one monomer capable of forming the second polymer in the presence of the polymer aqueous dispersion.

**8.** The method of manufacturing composite particles according to claim 6 or claim 7, wherein the content ratio of the water-soluble electrolyte is from 0.01 % by mass to 10 % by mass with respect to the first polymer in the polymer aqueous dispersion.

**9.** The method of manufacturing composite particles according to any one of claims 6 to 8, wherein the volume average particle diameter of the first polymer in the polymer aqueous dispersion is from 0.1 nm to 80 nm.

**10.** An ink set comprising:

the aqueous ink composition according to any one of claims 1 to 5; and
a treatment liquid capable of forming aggregates by being brought into contact with the aqueous ink composition.

**11.** An image forming method comprising:

applying, to a recording medium, the aqueous ink composition according to any one of claims 1 to 5; and
forming an image by heat-fixing the recording medium to which the aqueous ink composition has been applied.

**12.** The image forming method according to claim 11, further comprising;
applying, to the recording medium, a treatment liquid capable of forming aggregates by being brought into contact with the aqueous ink composition.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002088285 A
- JP 8283636 A
- JP 2006249282 A
- JP 2000319329 A
- JP 2001181549 A
- JP 2002088294 A
- JP 2001247787 A
- JP 9302007 A
- JP 2007100071 A
- JP 2001115066 A
- JP 2001335714 A
- JP 2002249677 A
- JP 2007169418 A
- JP 59157636 A
- JP 2003322926 A
- JP 2004325707 A
- JP 2004309806 A
- JP 8169172 A
- JP 8027693 A
- JP 2276670 A
- JP 7276789 A
- JP 9323475 A
- JP 62238783 A
- JP 10153989 A
- JP 10217473 A
- JP 10235995 A
- JP 10217597 A
- JP 10337947 A
- JP 2003306623 A


### Non-patent literature cited in the description


- **J. Brandrup ; E.H.Immergut.** Polymer Handbook. Wiley-Interscience, 1989
- JAPAN TAPPI Paper and Pulp Testing Method. JAPAN TAPPI, 2000